# EUROPEAN PATENT SPECIFICATION

(11) **EP 4 488 670 B1**
(45) Date of publication and mention of the grant of the patent: **11.11.2026**
(21) Application number: 24185020.5
(22) Date of filing: 27.06.2024
(51) Int. Cl.: G01N 27/38, G01N 27/416, G01N 27/02, G01N 27/48

(54) **SYSTEMS FOR REDUCING INTERFERENCE BY ONE OR MORE BUBBLES IN A SENSING ASSEMBLY AND METHODS**
SYSTEME ZUR VERRINGERUNG DER INTERFERENZ DURCH EINE ODER MEHRERE BLASEN IN EINER SENSORANORDNUNG UND VERFAHREN
SYSTÈMES DE RÉDUCTION D'INTERFÉRENCE PAR UNE OU PLUSIEURS BULLES DANS UN ENSEMBLE DE DÉTECTION ET PROCÉDÉS

(30) Priority: 07.07.2023 US 202318348877
(43) Date of publication of application: 08.01.2025
(73) Proprietor: Analog Devices International Unlimited Company, Limerick, V94 N4V2 (IE)
(72) Inventor: Berduque, Alfonso, Limerick, V94 RT99 (IE); O'Donnell, Alan, Limerick, V94 RT99 (IE); Mullins, Simone, Limerick, V94 RT99 (IE); Wu, Joyce, Wilmington, 01887 (US); Xia, Junfei, Wilmington, 01887 (US); Doyle, Richard, Limerick, V94 RT99 (IE)
(74) Representative: Elkington and Fife LLP

(56) References cited:
- WO-A1-2012/013814
- JP-A- 2007 245 038
- JP-B2- 5 261 124

## Description

### FIELD OF THE DISCLOSURE

This disclosure relates to a method and system for reducing interference by one or more bubbles in a sensing assembly, for example in a sensor assembly for sensing a property of a sample.

### BACKGROUND

Electrical sensors, such as electrochemical sensors, which measure the properties of liquids can be prone to interference from bubbles. For example, in the context of an electrochemical sensor, bubbles on or over a sensing surface will interfere with the interaction of the surface with the surrounding liquid and reduce or inhibit the available electrode area and, therefore, interfere with the measurement (e.g., precision) and the reduction in area will affect the measurement accuracy. If the bubbles or collection/concentration of gas formed are too large, the sensor may stop working. The bubbles may be formed due to device topography (corners, protrusions, recesses), surface tension forces, hydrophilicity-hydrophobicity difference between the fluid and the device surface, opening or breaks in a fluid pathway, material properties related to the electrode or channel construction or user error.

In some cases, these sensors will be in systems which include microfluidic channels, tracks or vias and these can exacerbate the generation of bubbles and are also prone to interference in the flow from bubbles. Bubbles can form, for example, in corners and on surfaces in microfluidic systems and particularly where these are complex (e.g., a plurality of connected channels and/or vias/tracks or linked structures). These can interfere with the flow through the microfluidic channels or components (e.g., valves) and/or be transferred downstream and directly interfere with the sensors.

The interference caused by bubbles/unwanted gas formation is increasingly disruptive as sensor assemblies are miniaturised, as the formation is increased and the interference amplified.

This can also be problematic in the manufacture of sensors. Bubbles can form on the surface of regions that are to be treated or functionalized, for example with a capture species (e.g., biomolecules), and can prevent the regions covered from being treated or functionalized.

Moreover, there is an increasing desire to generally increase the performance of these sensors. Sensors need to be smaller, carry out measurements more quickly and be more efficient with an accuracy depending on the specific requirements of the application. It is therefore important that removing bubbles from such systems is not overly disruptive to the measurement and does not compromise these design principles.

It would be advantageous to prevent or reduce interference of bubbles in such sensors and their systems.

WO2012/013814A1 discloses sensor units which include at least one of (a) a sensing surface, when mounted for operation, is orientated at an angle between, but not equal to, horizontal and vertical, a channel has a cross-section with a vertical dimension that is larger at one position across the channel than at another; and/or (c) a portion of the sensor unit that covers said sensing surface is sufficiently transparent so as to visually detect an obstacle retained in the sensor unit during normal operation, and wherein the side- walls of said channel in contact with the sensing surface are constructed from a deformable material. JP2007245038A discloses an air bubble removing device which removes air bubbles in a microflow path by varying a liquid feeding output in time series through control of a liquid feeder.

### SUMMARY OF THE DISCLOSURE

In a first aspect, there is provided a method for reducing interference by one or more bubbles in a sensing assembly as defined in claim 1.

In a second aspect, there is provided a system for reducing interference by one or more bubbles in a sensing assembly as defined in claim 11.

### BRIEF DESCRIPTION OF THE DRAWINGS

The present disclosure will now be described in more detail with reference to the accompanying drawings, which are not intended to be limiting:
Fig. 1 provides a schematic plan view of a system according to an aspect;
Fig. 2 provides a schematic plan view of a sensor assembly for use in the system of Fig. 1 according to an aspect;
Fig. 3 provides a schematic cross-sectional view of the sensor assembly of Fig. 2;
Fig. 4 provides a schematic plan view of a system according to an aspect;
Fig. 5 provides a schematic plan view of a sensor assembly for use in the system of Fig. 4 according to an aspect;
Fig. 6 provides a schematic cross-sectional view of the sensor assembly of Fig. 5;
Fig. 7 provides a schematic plan view of a sensor assembly for use in a system according to an aspect;
Figs. 8A to 8C provide plan views of an electrode used in Example 1;
Figs. 9, 10A and 10B provide plots of data from an electrochemical impedance spectroscopy (EIS) experiment on the electrode of Fig. 8A and 8B;
Figs. 11A to 11F provide plan views of electrodes used in Example 2;
Figs. 12 and 13 provide the results of a Cyclic Voltammetry (CV) scan on the electrode of Fig. 11A;
Fig. 14 provides the results of a chronoamperometry (CA), on the electrode of Fig. 11A;
Figs. 15A to 15D provide plan views of electrodes used in Example 3;
Figs. 16A to 16F provide plan views of an electrode used in Example 4;
Fig. 17 provides the results of a CV scan on the electrode of Figs. 16A, 16C and 16E;
Fig. 18 provides the results of a CA, on the electrode of Figs. 16A, 16C and 16E; and
Fig. 19 provides a block diagram of a method according to an aspect.

### DETAILED DESCRIPTION

Electrical sensors, such as electrochemical sensors, when used with liquids can be susceptible to interference by bubbles or the formation of gases in specific areas or locations. For example, bubbles on or over a sensing surface will interfere with the interaction of the surface with the surrounding liquid and thereby reduce the available sensing surface area. This not only interferes with the measurement, generally, but the reduction in surface area available for measurement will affect quantification calculations. If the bubbles are too large, the sensor may stop working. The bubbles may be formed due to device topography (corners, protrusions, recesses), surface tension forces, hydrophilicity-hydrophobicity difference between the fluid and the device surface, opening or breaks in a fluid pathway, or user error. In some cases, this may be within a microfluidic channel, which may also be prone to interference in the flow from bubbles. Bubbles can form, for example, in corners and on surfaces in microfluidic systems and particularly where these are complex.

In a first aspect, a method for reducing interference by one or more bubbles in a sensing assembly is as defined in claim 1.

In a second aspect, a system for reducing interference by one or more bubbles in a sensing assembly is as defined in claim 11.

Aspects of the disclosure provide methods and systems which can detect a first property or parameter relating to bubbles and/or to gas in the sample solution and use this detected property in a subsequent removal step to inform the removal process. Removal of the bubbles from the surface in question will improve the performance and accuracy of the sensor, for example by either clearing a sensing surface of bubbles so that the measurement can be more accurately performed (or in extreme cases, the sensor can function) or by clearing a fluid flow pathway so that sample can reach the sensor reliably. In the case of manufacturing a sensing assembly, this can improve the reliability of the manufacturing process by avoiding interference by bubbles when functionalising surfaces or delivering reagents through microfluidic pathways.

Performing this removal step with the first property determined improves the efficiency and effectiveness of the process and reduces sensor assembly down time. It can also improve the accuracy of measurements, as set out below. For example, the first property can provide an indication as to the presence of the one or more bubbles, such that the removal of the one or more bubbles can be dependent on whether the bubbles are actually detected. This can avoid unnecessary operations of a removal process, and thus can be used to reduce sensor downtime and wastage due to running additional or unnecessarily long removal processes. Moreover, the sensor can be responsive to the detection of bubbles, making the process more flexible and responsive as compared to simply running removal steps at intervals or by performing measurements without knowing whether the measurement is being disrupted by bubbles. The first property can additionally or alternatively relate to a gas (i.e., a gas forming the bubbles, in the form of gas in the form of a bubble and/or dissolved gas in the solution) in the solution. This similarly allows the subsequent removal step to be tailored to the gas property. For example, the process used or the properties of the stimulus applied (e.g., at a particular redox potential) can be modified so that the removal step is more efficient and effective and tailored to the specific bubbles or gas present in the solution.

### First Property

The first property is a bubble-related property or parameter in that it relates to the presence of one or more bubbles in the region and/or it relates to a gas (i.e., a gas forming the bubbles, in the form of gas in the form of a bubble and/or dissolved gas in the solution) in the region. As set out above, this determination is then used in the subsequent step of removing the bubbles. This provides a pre-screen of either the presence of bubbles or a parameter related to the bubbles, which is then used as a basis for the subsequent removal.

Methods of determining the first property are set out below, but it will be appreciated at that any method for detecting a property relating to bubbles, such as the presence, quantity or interference, can be used in the disclosed methods and the particular choice may depend on the particular implementation and the subsequent removal step.

### "relates to a gas in the solution in the region on or adjacent the surface of the sensing assembly"

As set out above, the first property can in some aspects relate to a gas in the solution in the region on or adjacent the surface of the sensing assembly. This may be in addition or alternatively to detecting a first property or parameter related to the presence of one or more bubbles in the solution.

By "gas", it is meant a gas forming the one or more bubbles and can be in the form of the gas in the bubble (i.e., the first property relates to a measurement of a property or parameter of the gas in the bubble(s)) or it can relate to that gas in the form of the molecules forming the gas when in the solution (e.g., as a dissolved gas). In other words, the one or more bubbles are comprised of or consist of a gas, and the first property relates to the gas. For example, where the one or more bubbles in such a system are typically formed of or comprise oxygen, the measurement of the first property can relate to oxygen in the solution in the form of dissolved oxygen or oxygen in the bubble. Exemplary gases in aspects can be selected from at least one of oxygen, carbon dioxide, and nitrogen. In the case of oxygen, this accordingly relates to oxygen, or a property of oxygen, in the solution on or adjacent the surface of the sensing assembly. In some aspects, the bubble has a volume % content of at least 50% of the gas in question, such as at least 75vol%.

In some aspects, the first property relating to a gas can be the measure of a property of the gas in the solution, such as the gas reduction potential or the concentration of dissolved gas(es), and in some cases this can also be an indicator, directly or indirectly, to the presence of the bubbles (but this need not be case). In some cases, this parameter may not provide a direct indication as to the presence of a bubble but may nevertheless be useful in the determination of optimal removal parameters. For example, taking the gas reduction potential, this in turn can be used in an electrochemical reduction to optimally reduce the gas and thereby reduce the bubbles. In other cases, parameters such as concentration of dissolved gases may provide an indication of likelihood of the presence of bubbles and thus be an indirect indicator of bubble presence.

These first properties are useful in optimising the bubble removal, as will be set out below, and may also be helpful in determining the presence, or at the least inferring the presence, of one or more bubbles on the surface. In other cases, the first properties may be useful in optimising bubble removal (e.g., determining the parameters for the bubble removal step) but which may not be tied directly to the presence of bubbles.

In one aspect, the method comprises determining the first property, the first property relating to a gas in the solution in the region on or adjacent the surface of the sensing assembly, and wherein the property is selected from at least one of the reduction potential of the gas in the solution and the concentration of dissolved gas in the solution. In these aspects, the gas can be oxygen and/or carbon dioxide. The determination of the gas reduction potential (redox potential) can be particularly useful as it enables subsequent use of the reduction potential to optimise a subsequent removal step. For example, the redox potential (V) can be used to then subsequently electrochemically reduce the gas and therefore reduce the volume of the gas in the bubbles. Although each compound will have a standard reduction potential, the potential will vary depending on environmental conditions, such as pH, ionic strength, solution type, etc. and the reference electrode used, and accordingly determining the reduction potential in the particular environment prior to a removal step, specifically one involving the reduction potential, is advantageous.

Reduction potential (or redox potential) or, in some aspects, an estimate of the reduction potential, can be determined by any suitable means in the art, for example using an electrical sensing assembly comprising a working electrode, a counter electrode and a reference electrode. In aspects, various voltages may be applied across range of potential reduction potentials, such as across as range comprising or within -1.0 V to 1.6 V (which encompasses typical reduction potentials for oxygen and carbon dioxide). This data can be numerically or graphically analysed. For example, in the case of a graphical analysis, the graph can be reviewed for a peak (e.g., within the expected potential range) or a plateau indicating a redox potential. For example, in some aspects, the method will comprise analysing the resultant current to identify the point at which there is a particular rate change or step in the measured current within the expected redox potential range. In some aspects, the reduction potential can be determined by analysing the voltage at which the current changes by a set amount (e.g., by at least 5 mV, such as at least 10mV, or at least 25 mV) or where the rate of current change increases (e.g., by at least 5 mV/unit time, such as at least 10mV/unit time). It is expected that the rate of change will be relatively linear across a local value (i.e., there is a plateau) until the redox potential is reached, at which point the current and the rate of change in current will change. This is because, when the current increase deviates from a linear change, the reaction is becoming less dependent on the voltage increase to increase the rate of reduction. At this point of inflection (or even a small degree past this e.g., 10-50 mV) can be the most effective potential for reduction. In other aspects, the reduction potential can be determined using the Tafel equation. The Tafel equation (equation 1, set out below) can show a similar relationship i.e., when the rate of oxygen reduction is under kinetic (voltage) control, where the increase in current will be linear in log form. This value or a set voltage step (e.g., 10-50 mV) beyond this point of inflection can be used to determine the voltage to apply - i.e., the reduction potential. In some aspects, the potential applied may be within 0.1 V, such as 50 mV or 10 mV within the determined reduction potential or inflection point. [equation 1] $η = \pm A {log}_{10} \left(\frac{i}{{i}_{10}}\right)$ Wherein *η* is overpotential (V); *A* is Tafel slope (V); *i* is current density (A/m²): and *i*₀ is exchange current density (A/m²). A plus sign under the exponent refers to an anodic reaction, and a minus sign to a cathodic reaction.

For example, in some aspects, the potential applied may be from -1.0V to 1.6V, such as -1.0V to 1.2V such as greater than -1.0V to 1.2V, such as -0.8V to 0V. Typical oxygen reduction potentials can be found in the region of -1.0V to -0.4V (such as greater than -1.0V to -0.4V), and particularly -0.8V to -0.4V, in solution and, therefore, this is a particularly important range. Electrolysis of water at can occur at -1.0V, so it can be advantageous to avoid this potential. Typical carbon dioxide reduction potentials can be found in the region of -0.7V to -0.2V. The redox potential can be relative to the reference electrode. These reduction potentials can, in aspects, be relative to the standard hydrogen electrode (SHE) or reversible hydrogen electrode (RHE).

It will be appreciated that reduction potential need not be precisely measured for there to a benefit relative to applying a standard reduction potential. For example, it will be appreciated that determining precise redox potentials for the gas reactions requires precise control of all aspects of the reaction which may not be practical. Given that any gas present in the system should be removed or reduced, the determined reduction potential represents an improvement over simply using an estimate based on expected gas in the one or more bubbles, and instead represents what is there and even an estimate of this is useful.

In some aspects, a broad first potential range may be applied and then a second, narrower window centred on the gas reduction value or peak can conducted.

In some aspects, the reduction potential is determined by carrying out a Cyclic Voltammetry (CV) measurement. This can be across the range of potentials mentioned above. CV has been found to be particularly effective at identifying a gas reduction potential in this context because it is a relatively fast measurement which can be carried out using an electrical sensing assembly, enabling easy integration into the types of systems disclosed herein. In some aspects, this can be carried out by the sensing assemblies disclosed herein (i.e., using the sensing assembly electrodes).

In some aspects, the first property relates to the concentration of dissolved gas in the solution, for example where the bubbles are formed of the gas. The dissolved gas can be dissolved oxygen, carbon dioxide, or nitrogen, in aspects. Concentration of dissolved gas can correlate with increased likelihood of bubble formation and therefore provide an indication of a likelihood that bubbles are present.

In typical sensor assemblies, the conditions remain roughly the same with similar samples, calibration fluids and flush fluids used to maintain sensor performance. Therefore, concentration of dissolved gases is a good indicator (indirect measure) of the likelihood of bubbles and is one that can be implemented using electrochemical sensors and therefore be integrated into sensing assemblies, or utilize existing electrochemical components in the sensing assemblies to provide an indicator of the presence of bubbles. It can also be useful tool for determining the optimal conditions for removal of the bubbles, since it provides a semiquantitative indicator of the expected number of bubbles.

In some aspects, the first property of the gas is determined using the sensing assembly. For example, the sensing assembly may comprise an electrode defining or comprising the surface, and the step of measuring the first property can be carried out using the electrode (e.g., as a working electrode). This advantageously reduces the number of overall components in the sensing assembly and therefore provides a means of improving bubble removal without necessarily increasing the footprint of the sensing assembly or the complexity in manufacture. In some cases, this enables the methods to be carried out on existing devices without retrofitting or redesign. In some aspects, the step of determining the first property of the solution comprises obtaining a first property measurement signal from the electrode and determining the first property based on the first property measurement signal.

### Detecting the presence of one or more bubbles in the region on or adjacent the surface of the sensing assembly

In some aspects, the first property relates to the presence of one or more bubbles in the region. This can be an indication that the one or more bubbles have been detected in the region or it may include a quantitative factor indicating a quantity of bubbles on (or adjacent) the surface, for example number of bubbles and/or volume of the bubbles. That is, the method and systems in aspects comprise pre-detecting the presence of one or more bubbles or a property and carrying out removal of the one or more bubbles based on the detection of the presence and any addition properties (such as number or volume of bubbles) determined in this stage. This may be in addition or alternatively to detecting a first property or parameter related to the gas in the solution, set out above, and the methods and systems further comprise carrying out a removal step based on both a first property relating to the presence of one or more bubbles in the region and a (further first) property relating to the gas in the solution.

Accordingly, in one aspect, wherein determining the first property comprises detecting the presence of one or more bubbles in the region on or adjacent the surface of the sensing assembly; and wherein the step of removing at least a portion of the one or more bubbles is based on determining the presence of one or more bubbles in the region on or adjacent the surface of the sensing assembly.

In some aspects, the presence can be an indication that one or more bubbles have been detected in the region or it may be a quantitative measure which further provides an indication relating to the one or more bubbles. This may include, in aspects, the number of bubbles and/or the volume of at least one of the bubbles and/or a total volume of bubbles in the region (or in some aspects, in the sensing assembly). The quantitative measure can inform the operation of the removal step. For example, where a large volume or number of bubbles is detected, the removal step can be operated based on the quantitative first property and a property of the removal step be varied, such as intensity or strength of the removal step and/or duration of the removal step.

In some aspects, wherein the method comprises detecting the presence of one or more bubbles on or adjacent the surface of the sensing assembly using at least one of a spectroscopic measurement, an optical measurement, a gravimetric measurement or an electrical measurement. Optical measurements can include an optical sensor located adjacent (e.g., above, for example by including an optical via so that the area of concern (region) is visible) the surface and configured to detect the presence of one or more bubbles. Gravimetric measurements can include identifying a change in frequency of a resonator in a balance (such as a quartz crystal microbalance (QCM)) upon adsorption of bubble onto the surface. Capacitive measurement can include measuring a change in a capacitive property, such as a dielectric constant of the solution or of the surface, due to the presence or absorption of a bubble, respectively.

In one aspect, the method comprises detecting the presence of one or more bubbles in the region on or adjacent the surface of the sensing assembly using Electrochemical Impedance Spectroscopy (EIS). In some aspects, this can be carried out using the sensing assembly and, in some aspects, the electrode forming a surface. EIS is an excellent tool by which to spot bubble and is one which can be implemented using small-scale electrodes such that this can be readily integrated into existing miniaturised systems and can even use existing structures when retrofit. It is also easy to spot larger bubbles through EIS. In wherein the EIS measurement comprises obtaining measurement signal(s) and plotting at least one of a Bode plot or a Nyquist plot. This can be used to identify the presence of one or more bubbles. In some aspects, the EIS may use an AC voltage of 1 to 10 mV, such as 2 to 10 mV, such as 2 to 5 mV. The frequency range may be from 0.1 Hz to 1 MHz.

The step of determining the first property may be a continuous measurement designed to identify the forming or presence of one or more bubbles or a change in the first property. In other aspects, this may be carried out as a discrete measurement at specific times, such as time intervals or before and/or after measurement. In some aspects, the determination may be repeated after the step of removing the one or more bubbles so as to confirm that these have been removed or reduced.

### Determination means

Different methods can be used to determine the first property and optimise sensitivity of these methods, including, in aspects, electro or electrochemical methods. In some aspects using electrodes to determine the properties, electrode size/surface area/finish/topography can be varied to optimise the measurement and improve the ability to detect the first property. For example, the electrode or relative dimensions, roughness, materials, can be modified depending on the system in which it is employed. The thresholds (e.g., current) may be based on a particular system or size, or a set current density limit may be set.

### Treatment/Bubble Removal

Based on the determination of the first property, the methods and system remove at least a portion of the one or more bubbles from the region on or adjacent the surface of the sensing assembly. In other words, on determination of the first property, the removal step is carried out. In this way, the region can be cleared of the one or more bubbles, for example by moving the bubble(s) to another part of the system where they will not interfere with a measurement (or the function of the surface, if something other than measurement, or the manufacturing process used to create the sensor assembly) or by reduction the volume of the bubbles. In other words, this step is intended to reduce the surface area of the surface (e.g., electrode) which is impeded by the one or more bubbles and therefore reduces the volume of bubbles in the region (e.g., on or over the surface) by reducing the total volume of the bubbles such that the surface area of the surface covered or impeded by the bubbles is lower. This treatment (bubble removal) can be triggered by the step of determining the first property, in some aspects, or in other aspects may be carried out at predetermined intervals and may use the first property in carrying out the method.

### Reducing Bubble Volume

The step of removing at least a portion of the one or more bubbles comprises reducing the volume of the one or more bubbles. In other words, the volume (e.g., mm³ or cm³) of the gas is reduced. This is typically achieved in aspects by decreasing the amount of gas in the bubble. This is a reduction in the volume of gas in the bubbles on or adjacent the surface in question (i.e., the "region"). Such a method advantageously can be used to completely remove the bubbles from the surface and the vicinity. This has advantages over other bubble removal methods (e.g., flow) since it can be used to without disturbing the rest of the sample elsewhere in the sensing assembly and system. For example, the ability to remove or reduce the size of bubbles also helps to avoid simply moving the bubbles to another part of the active system, where they could cause additional problems. For example, compared to a system where bubbles are flushed downstream and could contact electrodes or get stuck in microfluidics or waste valves, the reduction of the size avoids these risks.

### Electrochemical Reduction

Electrochemical reduction is an advantageous implementation of reducing the volume of the bubbles. It provides an effective and straightforward method of reducing the size of bubbles, or eliminating them entirely. This can also be implemented in existing bio- and chemical- sensor designs without requiring significant redesign or additional external components (e.g., a pump or actuator). Electrochemical reduction also has the advantage that it can avoid impacting or disturbing the remainder of the sample. It will, however, be appreciated that reduction of bubbles at the surface using electrochemical means can, in some cases, result in gas generation at another electrode. This may not necessarily lead to bubble formation at the other electrode, but regardless this allows the bubbles to be eliminated at the active surface in question and the other electrode can be provided in a location that is of less concern such that any bubbles formed there (if at all) will not interfere with measurement or accuracy of the sensing element in question. Moreover, the selection of the reduction voltages based set out herein help to avoid gases being generated at the other (counter) electrode(s).

Electrochemical reduction of gas in the solution can include gas in the bubble and/or gas dissolved in the solution. Without wishing to be bound by theory, the electrochemical reduction can either reduce gas in the bubbles directly at the interface with the solution and/or it can reduce the concentration of gas at least in the local region around the surface (e.g., electrode) and thereby encourage gas in the bubble to re-dissolve into the solution (due to the lower concentration in the solution). In the case of the bubble comprising or consisting of oxygen, it is thought that the electrochemical reduction is primarily, if not exclusively, a reduction from O₂ to H₂O (see equation 2). The same principle applies to other gases, such as CO₂. In practice, it may not necessarily one single type of reduction occurring, providing that the net effect is a reduction in the volume of the bubble, typically achieved by shifting equilibrium of a redox reaction away from the gas in question. In the case of O₂, this can be achieved by reduction to H₂O or other molecules such as OH⁻ and/or H₂O₂, depending on the specific conditions (e.g., pH) and, for example, the presence of catalysts.

For example, where the gas is or comprises oxygen, the electrochemical reduction may comprise: [equation 2] ${O}_{2} + 4 {H}^{+} + 4 {e}^{-} ⇌ 2 {H}_{2} O$ O₂ can be in the form of a gas in the bubble or may be dissolved in the solution. Other variations are possible.

The redox potential (E⁰ V) for the reaction of equation 2 is reported as -1.229V. Accordingly, these can be achieved using the voltages achievable in typical bio- and chemical-sensor platforms.

The step of removing at least a portion of the one or more bubbles comprises electrochemically reducing oxygen in the solution so as to reduce the volume of the one of more bubbles. As set out above, this at least means the bubbles in the region such that the volume of bubbles on or adjacent the surface is In one aspect, the electrochemical reduction is an electrochemical reduction of O₂ to H₂O.

In aspects where the gas is or comprises carbon dioxide, the electrochemical reduction may comprise one of the following reactions: [equation 3] ${CO}_{2} + 2 {H}^{+} + 2 {e}^{-} ⇌ HCOOH$ [equation 4] ${CO}_{2} + 2 {H}^{+} + 2 {e}^{-} ⇌ CO + {H}_{2} O$

The redox potential (E⁰ V) for the reaction of these is reported as follows: reaction of equation 3 -0.61 V and reaction of equation 4 -0.53 V. Accordingly, these can be achieved using the voltages achievable in typical bio- and chemical- sensor platforms.

In some aspects, the method comprises applying a voltage in the range of from -1.0 V to 1.6 V. Voltages in these ranges can lead to electrochemical reduction of gases so as to reduce the volume of the one or more bubbles. In some aspects, this may be greater than - 1.0V to 1.6V to reduce the risk of hydrolysis of water. In aspects, the potential applied is in the range of -0.9V to 1.2V, -0.8V to 1.2V, -0.9 to 0V, -0.8V to 0V, -0.9 to less than 0V, -0.8V to less than 0V, -1.0V to -0.4V, greater than -1.0V to -0.4V), -0.7V to -0.2V or -0.8V to -0.4V. In some aspects, the voltage is greater than 0.1V or less than -0.1V, such as greater than 0.4V or less than -0.4V. The reduction potentials noted herein can, in aspects, be relative to the standard hydrogen electrode (SHE) or reversible hydrogen electrode (RHE).

In some aspects, the voltage may be applied at a pre-set or pre-determined single value (e.g., a hold), in other aspects the voltage may be swept through a voltage range, such across the range of -1.0 V to 1.6 V, -1.0V to 0V or greater than -1.0V to less than 0V, in some aspects the voltage may be pulsed (e.g., increased from a baseline to a higher, peak voltage before returning to the baseline or a voltage lower than the peak) a plurality of times.

In aspects, the voltage can be applied for at least 0.1 s, at least 1s, at least 10s, at least 30 s, at least 1 min or at least 5 mins. In some aspects, this can be from 0.1 s to 30 mins, from 1 s to 30 mins, from 30 s to 30 mins, from 1 s to 10 mins, from 1 s to 5 mins, from 10 s to 10 mins, from 1 min to 10 mins or from 1 min to 5 mins. It has been found that a timescale of the order of 10s to a few minutes is sufficient at these voltages to remove small-to-medium sized bubbles completely in a typical sensor system (e.g., bubbles with a diameter of the order of a few micrometres) and that larger bubbles (e.g., up to 100 micrometres) can also be removed in a few minutes, and in some cases faster.

The response from the application of the voltage may provide further feedback. For example, it is to be expected that there will be a response when performing the reduction and, therefore, the method may further comprise determining the response (e.g., current) to the reduction step and adjusting a parameter of the reduction step. The adjustment may comprise adjusting the parameters of the reduction step, such as voltage, duration, and/or in some cases, alternative removal steps may be used.

In some aspects, the method comprises determining the first property of the gas (e.g., oxygen and/or carbon dioxide) in the solution on or adjacent the surface of the sensing assembly; and the step of electrochemically reducing the gas (e.g., oxygen and/or carbon dioxide) in the solution is based on the determined first property of gas (e.g., oxygen and/or carbon dioxide) in the solution on or adjacent the surface of the sensing assembly. As set out above, the determination of the gas reduction potential (redox potential) can be particularly useful as it enables subsequent use of the reduction potential to optimise the removal step. Although each compound will have a standard reduction potential, the potential will vary depending on environmental conditions, such as pH, ionic strength, solution type, type of reference electrode used, etc. and accordingly determining the reduction potential in the particular environment prior to a removal step, specifically one involving the reduction potential, is advantageous. The reduction potential can thus be indicative of a positive potential limit such that it is known that going beyond this positive limit will not be useful. In some aspects, therefore, the reduction potential used is (negatively) less than the standard potential of the gas(es) so that voltage is no longer a limiting factor in the reaction rate. Kinetically controlled current behaves exponentially, deviation from this would indicate it is no longer limited by voltage. In further aspects, this may also be combined with the step of detecting the presence of one or more bubbles. For example, on detecting the presence, the step of determining the first property relating to the reduction potential may occur in these aspects. In some aspects, the step of determining the first property of the gas in the solution comprises determining the reduction potential of the gas in the solution, and wherein the step of electrochemically reducing gas in the solution comprises applying a potential to the solution, wherein the applied potential is within 0.1 V (i.e., +/- 0.1V, such as +/-0.05V) of the determined reduction potential.

In some aspects, the step of electrochemically reducing oxygen in the solution comprises applying a potential using chronoamperometry (CA), applying a constant potential; chronopotentiometry (CP), applying a constant current; and/or i-E cycling (CV). In some aspects, the step of electrochemically reducing oxygen in the solution comprises applying a potential using CA or applying a constant potential. These can be in conjunction with the other methods set out above, such as measuring the redox potential.

In some aspects, the potential can be applied using CA. CA has been found to be particularly effective at reducing the gas, and is relatively fast and easily integrated into sensor structures. In some aspects, this can be carried out by the sensing assemblies disclosed herein (i.e., using the sensing assembly electrodes). In some aspects, the application of a potential using CA is combined with the step of determining the reduction potential using a CV measurement. This advantageously provides a straightforward system for accurately determining a reduction potential and efficiently removing the bubbles.

In some aspects, a catalyst may be present, but these are not necessary required. In aspects, a catalyst can be selected from Au, Pt, Au and Pt-based alloys, carbon materials (e.g., graphite, graphene, carbon nanotubes, carbon black), biocatalysts, other noble metals, transition metals, or combinations thereof. In some aspects, the electrode may comprise or be formed of the catalyst. The material selection will also have an effect on the gas reduction voltages.

In aspects where the surface is an electrode, the method and systems comprise using the electrode to electrochemically reduce the gas in the solution. Accordingly, in such aspects, the sensing assembly comprises an electrode and the surface is a surface of the electrode; and the step of electrochemically reducing oxygen in the solution comprises electrochemically reducing oxygen using the electrode. This can be, for example, the same electrode used by the sensing assembly to perform its usual measurements (e.g., determine a property of an analyte, for example). In aspects where a reduction potential is determined, or indeed other electrical or electrochemical property, the electrode of the sensing assembly may also be used for this step.

### Other Removal Means

In other methods and systems not in accordance with the invention, the one or more bubbles can be removed by other methods of removal. For example, one or more of using an agitation device comprising a moveable element configured to cause agitation of liquid in the region (e.g., using a piezeoelectric, electroactive or thermal-actuated material) applying a force to move the bubbles from the region on or adjacent the surface; applying a vacuum to the solution (or a void above the solution); increasing the pressure applied to the solution (so as to dissolve the bubble in the solution); where the liquid carries a charge, applying a bias or force to flow the fluid across the surface or promote coverage of the surface (e.g., applying an electric field); and/or contact a gas scavenger with the surface and/or one or more bubbles. Application of a force can include flowing fluid, such as the sample over the surface to remove the bubbles, the use of an acoustic actuator to apply a force (e.g., an ultrasonic force, for example, generated by piezoelectric material), the use of an inductive coil to generate a force (e.g., radiofrequency). Gas scavengers can include an oxygen scavenger, for example where the gas contains or is comprised of oxygen, where the oxygen scavenger is brought into contact with the one or more bubbles. An example scavenger is Na₂SO₃. One or more of these can be used as an alternative to the electrochemical reduction set out above, or in combination with the electrochemical reduction.

In some aspects, the methods and systems may involve intermittent measurements of the first property. These can then be assessed against a trigger or threshold and, if met, then removal can involve initiating the removal step to activity to dislodge bubbles. (a type of "reset" for the electrodes to ensure that bubbles are below a certain level before readings are taken). In some aspects, there may be a two-step measurement process, whereby an initial property relating to one or more bubbles is measured. If a threshold is met or one or more bubbles are detected, this can trigger the determination of the first property. These methods and systems can allow parts of the system to enter low power or sleep states.

### Based on the first property

By based on the determination of the first property (or in some aspects, first properties), it is meant that a parameter or property of the removal step is determined by the first property. The first property can be, in some aspects, be a trigger for the activation of the removal step. For example, if one or more bubbles is detected and/or a first property value above a threshold, then the method and systems can carry out the removal step (e.g., for both method and system, cause the system or a device to perform the removal step). In alternative or additional aspects, the first property can control a parameter of the operation of the removal step, such as a duration, intensity, voltage, etc. For example, where a large volume or number of bubbles is detected, the removal step can be operated based on a property of the removal step be varied, such as intensity or strength of the removal step and/or duration of the removal step.

### Sensor/System Structure

The method and systems set out herein are for reducing interference by one or more bubbles in a sensing assembly. The sensing assembly comprises a surface (such as a plurality of surfaces) which may have a particular function, such as being an active surface which can be used to interact with a solution and is addressable or interrogatable to obtain an indication of the interaction of the solution (e.g., an analyte in the solution) with the surface. This can be, for example, an electrode defining the surface, or it could be a sensing layer which is interrogated by electrodes (e.g., a dielectric material, such as in a chemiresistor). In other aspects, these may be other surfaces such as those in microfluidic channels or regions where there is interference from bubbles which can otherwise impact measurements. In some cases, such as when the methods are carried out during manufacturing and where the systems are intermediate systems prior to the final sensing assembly form, these can be surfaces which are due be processed and the bubbles may interfere with the processing. Processing can, for example, include functionalization of the surfaces. In aspects where the surface is an electrode or a material, surface can include more than the "bare" surface of these components and can further incorporate additional layers on the active surface. For example, in aspects where the surface comprises or is defined by an electrode or sensing surface, the electrode or sensing surface may be functionalized or have further layers thereon.

As set out above, an aspect of the disclosure is directed to system for reducing interference by one or more bubbles in a sensing assembly, where the one or more bubbles are located in a solution in a region on or adjacent a surface of a sensing assembly, the system comprising a sensing assembly, the sensing assembly comprising at least one surface; and a control unit configured to: determine a first property of the solution, wherein the first property relates to the presence of one or more bubbles on or adjacent the surface of the sensing assembly and/or relates to a gas in the solution in the region on or adjacent the surface of the sensing assembly; and based on the determination of the first property, cause the removal of at least a portion of one or more bubbles from the region on or adjacent the surface of the sensing assembly.

The system may be configured to perform any of the method steps disclosed herein. For example, the control unit may be configured to operate the sensing assembly to perform any of the method steps herein. Moreover, any of the aspects set out herein with respect to the method apply equally to the system, and any of the aspects set out herein with respect to the system apply equally to the method.

Accordingly,the sensing assembly of the systems disclosed herein comprises a sensing layer configured to provide a measurement signal indicative of the interaction of the sensing layer with the solution, and wherein the surface is a surface of the sensing layer. The sensing layer comprises an electrode. In these aspects, the sensing assembly may comprise at least one electrode and the sensing assembly be configured to obtain a measurement signal from the electrode indicative of the interaction of the electrode with the solution. In other aspects, the sensing layer is a dielectric material and the sensing assembly may further comprise a set of electrodes adapted to interrogate the dielectric material and provide a measurement signal. In some aspects, as set out above, the sensing layer may comprise additional layers thereon, such as functional layers (e.g., capture species). The surface in such a case can include the sensing layer and any components or additional layers thereon.

The measurement signal in these aspects may be used for a separate measurement unrelated to the bubble removal property - i.e., for the sensing assembly's primary function. For example, the system may be configured to determine a further (e.g., second) property of the solution (such as a property of an analyte of the solution) and this may be based on the measurement signal in an additional measurement step, which can occur after the removal step. The methods, systems and sensor assemblies disclosed herein can therefore be used to determine or measure a property of a liquid sample, such as the temperature, electrical conductivity, a property of an analyte in the liquid sample characteristic. In certain aspects, this can be selected from the concentration of the analyte in the sample, the diffusion constant of the analyte (e.g., rate of diffusion measured in m²/s) in the sample matrix, or a combination thereof. The terms "analyte concentration" or "concentration of the analyte" as used herein may, in certain aspects, refer to the activity of the analyte. The activity of the analyte may provide a measure of the effective concentration of the analyte in a sample matrix. In aspects, the system may further comprise a control unit configured to: determine a property of the liquid sample based on the measurement signal.

In some aspects, the sensing layer can be used to determine the first property. For example, the electrode can be used to determine the first property. The measurement signal can therefore be used to determine the first property. In other aspects, an additional electrode or set of electrodes (e.g., a set of property measurement electrodes) can in some aspects provide a further measurement signal (e.g., a bubble property measurement signal) which can be used in the determination of the first property (i.e., the determination is based on this bubble property measurement signal), in addition to the sensing layer used to determine a property of the solution in the measurement step. In such aspects, the sensing assembly further comprises a set of property measurement electrodes; wherein the sensing assembly is configured to obtain a measurement signal from the set of property measurement electrodes; and wherein the control unit is configured to determine the property of the solution based on the measurement signal. In any of these configurations using sensing layer(s) (e.g., electrode(s)) to determine the first property, the sensing layer may define the surface(s). In other cases, the sensing layer (e.g., electrodes) may be provided on opposing sides of the surface so that the surface can be interrogated and/or treated. One advantage of the use of a further set of property measurement electrodes is that these may be optimised for measurement of the first property (e.g., reduction potential) whereas the sensing layer can be optimised for the primary measurement of the system. For example, the determination of the first property may be performed using property measurement electrodes which are optimised to reduce bubble formation or the influence of bubbles on the surface as compared to measurement electrodes. For example, in one aspect, the property measurement electrodes may provide a larger working electrode surface area than the electrode of the sensing layer, which can make the determination of the first property more robust.

The electrode is used to perform the removal step, via an electrochemical reduction. Accordingly, the same electrode can be used for sensing a (e.g., second) property of the solution (in a measurement step) and also the removal step. This is more structurally efficient and also has the benefit of having the electrode defining the surface used as part of the removal process and thus being in close proximity to the one or more bubbles. The same electrode can, in some aspects, be used in determining the first property, the removal step and a subsequent measurement step. In other aspects, an additional electrode or set of electrodes (e.g., a set of bubble removal electrodes) can in some aspects be present to provide the removal means for removing the one or more bubbles. These may be located adjacent the sensing layer. In some aspects, these can additionally be used to obtain the measurement signal (e.g., a bubble property measurement signal) for determining the first property.

In some aspects, the sensing assembly further comprises a reference electrode. Where the sensing layer is an electrode, this may act as a working electrode and the sensing assembly may further comprise a counter electrode. In some aspects, the sensing assembly comprises a substrate with the sensing layer, reference electrode and, optionally, counter electrode provided on the sensing layer.

In some aspects, where present, the surface may comprise a functional layer. In some aspects, this is a capture species configured to specifically bind to an analyte. Thus, the sensing assembly may be configured to determine a property of an analyte in a sample (the solution). Any suitable analyte capture species can be selected, according to the target analyte which is intended to be sensed by the sensor assembly. For example, each capture species may comprise an antibody with specificity for a particular antigen. In such an example, the analyte may take the form of the antigen. More generally, each capture species may, in some aspects, comprise at least one selected from a protein, a peptide, a carbohydrate, aptamer and a nucleic acid. The protein may, for example, be an enzyme, such as an enzyme having specificity for the analyte. In other non-limiting examples, the protein is an antibody. In the latter case, the analyte may be an antigen which is specifically bound by the antibody. Each capture species may, for instance, comprise or be defined by an antigen. In this case, the analyte may be a species, such as an antibody, which is specifically bound by the antigenic capture species. The antigen may be or comprise, for example, a protein, a peptide, a carbohydrate, such as a polysaccharide or glycan. In an aspect, each capture species is a capture antibody. In an aspect, each capture species comprises an aptamer. An aptamer may be defined as an oligonucleotide or peptide configured to bind the analyte. Such an aptamer may, for example, be configured to interact with, for example bind, various analyte types, such as small molecules, for example amino acids or amines, proteins, metal ions, and microorganisms. In such cases, the presence of one or more bubbles may interfere with the binding of a capture species with the target analyte and/or may interfere with the deposition of such capture species during manufacture.

In the methods and system disclosed herein, the transducer mechanism(s) used to determine the measurement signal(s) may be any suitable method of transduction. For example, this may comprise measuring the potential (e.g., voltage), current, permittivity, charge and/or frequency. Changes in or interactions with a sensing layer (e.g., electrode) can be detected by these means. Where a capture species is present and used for measurement of a property of the solution, this can be interaction of the capture species with an analyte of interest.

The sensing layer, and where present electrodes, may comprise or be formed from copper, nickel, platinum, silver, silver chloride, gold or other noble metals. In some aspects, this may comprise or be formed from TiO₂ or indium tin oxide (ITO). Other sensing layers may include a substrate with a coating on which the anchor species is immobilized. In other aspects, the sensing layer may comprise or be formed of carbon (graphene, graphene oxide, or nanotubes), silicon dioxide, aluminum oxide, silicon and/or an electroactive polymer. Sensing layers can provide immobilization of capture species through both covalent-like interactions (e.g., chemisorption of anchor species onto the surface through chemical bond formation) and non-covalent-like interactions (e.g., physisorption of capture species onto the surface through weaker, often van der Waals, interactions) depending on the identity of the surface and the capture species. Provision of capture species or other functionalization to the sensing layer can be achieved through techniques such as spin-coating, physical vapor deposition or electrophoretic deposition, or immersion of the sensing layer in solution.

In some aspects, the control unit is configured to determine the first property and/or a second property of the solution based on the measurement signal. As set out above, the control unit may receive the measurement signal (or a processed signal based on the measurement signal) and determine or calculate the first property, and optionally also the second property, based on the signal. The second property can be a further property of the solution (in a measurement step) - i.e., be the measurement the sensing assembly is primarily provided to make, which may be a property of an analyte in solution, for example.

In one aspect, the system may further comprise a signal processing unit configured to process measurement signals received from the sensor assembly (e.g., a sensing layer, or an electrode, where present); and a property determination unit may receive processed signals and determined the property (e.g., the first property, or another property) based on the processed signals. The property determination unit may, in certain aspects, be configured to determine the property based on (at least) the absolute change in measurement signal and/or the rate of change of the signals. The control unit, property determination unit and/or signal processing unit may each (individually or combined) be a processor or controller. The control unit may incorporate the property determination unit and/or the signal processing unit or may be in addition to one or both of these. The control unit, signal processing unit, and the property determination unit may be implemented in any suitable manner, with software and/or hardware, to perform the various functions required. One or all of the units may, for example, employ one or more microprocessors programmed using software (for example, microcode) to perform the required functions. Examples of processor components that may be employed in various aspects include, but are not limited to, conventional microprocessors, application specific integrated circuits (ASICs), and field-programmable gate arrays (FPGAs). In various implementations, the control unit, the signal processing unit, and/or property determination unit may be associated with one or more non-transitory storage media such as volatile and non-volatile computer memory such as RAM, PROM, EPROM, and EEPROM. The non-transitory storage media may be encoded with one or more programs that, when executed on one or more processors and/or controllers, perform the required functions. Various storage media may be fixed within a processor or controller or may be transportable, such that the one or more programs stored thereon can be loaded into the signal processing unit, property determination unit and/or control unit. The system may comprise each of these components, where present, in a single device or at a single location, or the control unit and, where present, other components may each individually or as a whole be distributed across a network, such as the internet. The system can also contain antenna, such as RFID structures, such that the sensor outputs can be wirelessly transmitted and/or inputs can be wirelessly transmitted, for example determination of the first property and/or initiation of the removal step can be carried out remotely. For example, wireless activation of electrodes, an agitation device or a force generation device can be used. The system can also be configured such that the data generated is encrypted.

In some aspects, the sensing assembly further comprises a set of first property measurement electrodes; wherein the sensing assembly is configured to obtain a first property measurement signal from the set of first property measurement electrodes; and wherein the control unit is configured to determine the first property of the solution based on the first property measurement signal. In other words, this may be a set of measurement electrodes (e.g., a working, counter and optionally reference electrode) used in the determination of the first property and which may be separate to the surface (e.g., sensing layer, such as an electrode).

In some aspects, the sensing layer comprises an electrode; and wherein the control unit is configured to control the sensing assembly to electrochemically reduce gas in the solution using the electrode and thereby reduce the volume of the one of more bubbles. This may be in accordance with any of the steps and parameters set out in respect of the method, such as time and applied voltages. For example, in some aspects, wherein the control unit is configured to determine the first property by determining the reduction potential of gas in the solution; and wherein the control unit is configured to cause the sensing assembly to apply a potential to the solution within 0.1 V of the determined reduction potential so as to electrochemically reduce gas in the solution using the electrode and thereby reduce the volume of the one of more bubbles.

In some aspects, the system further comprises a fluid agitation device configured to agitate fluid in the region on or adjacent to the surface so as to remove bubbles in the region; and wherein the control unit is configured to operate the fluid agitation device, based on the determination of the first property, so as to cause the removal of at least a portion of the one or more bubbles from the region on or adjacent the surface of the sensing assembly. This can comprise incorporation of piezoelectric or electroactive polymer structures that can be stimulated to impart forces within the sensing system in specific areas of the system. In additional or alternative aspects, the system further comprises a bubble removal device configured to apply a force to the solution in the region on or adjacent to the surface so as to remove bubbles in the region; and wherein the control unit is configured to operate the bubble removal device, based on the determination of the first property, so as to cause the removal of at least a portion of the one or more bubbles from the region on or adjacent the surface of the sensing assembly. The one or more bubbles can therefore be removed by one or more of applying a force to move the bubbles from the region on or adjacent the surface and/or applying a bias or force to flow the fluid across the surface or promote coverage of the surface (e.g., applying an electric field).

In some non-limiting examples, the system includes a user interface, such as a display. Alternatively or additionally, the system may include a communications interface device, such as a wireless transmitter, configured to transmit the analyte concentration determined by the property determination unit to an external device, such as a personal computer, tablet, smartphone, remote server, etc.

In one aspect, there is provided a computer program comprising computer program code which is configured, when said computer program is run on one or more physical computing devices, to cause said one or more physical computing devices to implement the methods disclosed herein.

In one aspect, there is provided one or more non-transitory computer readable media having a computer program stored thereon, the computer program comprising computer program code which is configured, when said computer program is run on one or more physical computing devices, to cause said one or more physical computing devices to implement the methods disclosed herein.

In some aspects, the control unit is configured to determine the first property by detecting the presence of one or more bubbles on or adjacent the surface of the sensing assembly; and wherein the control device is configured to carry out the step of removing at least a portion of the one or more bubbles from the region on or adjacent the surface based on determining the presence of one or more bubbles in the region on or adjacent the surface the sensing assembly. In some aspects, the control unit is configured to detect the presence of one or more bubbles on or adjacent the sensing assembly using at least one of a spectroscopic measurement, an optical measurement, a gravimetric measurement or an electrical measurement. In one aspect, the control unit is configured to detect the presence of one or more bubbles in the region on or adjacent the surface of the sensing assembly using EIS.

The sensing system can incorporate microfluidic channels and could have stacked structures and different materials such as glass, ceramic, silicon, stainless steel, laminate, build up structures, processing circuitry, passives discretes, optical vias, apertures, filters etc. depending on the specific requirements of the application.

### Definitions

"Bubble" as set out herein is the pocket or void of gas formed in the sample. The bubble comprises at least one gas, by which it is meant the void is filled with the gas, and is typically predominantly one gas in these environments. As set out above, "gas" is the gas (in gaseous form) found in the bubble void but can also include dissolved gas (i.e., the same gas) in the solution.

By "region on or adjacent a surface" it is meant that the one or more bubbles is located at least partially on the surface with the wall of the bubble in contact with the surface to the extent that the bubble rests or otherwise adheres to the surface (e.g., through electrostatic or other interactions) or that the bubble is next to and sufficiently close to the surface such that it can interfere with a measurement or interaction with the surface. This may be within a region defined perpendicular to a part of the surface defining a plane, such as directly above. For example, adjacent may in some aspects, mean within 1 micrometre of the surface, such as within 500 nm, such as within 250 nm, such as within 100 nm, such as within 50nm (in any direction, or directly above in some aspects). Many measurements rely on interactions at these distances, particularly within 100 nm (where capture species can be of the order of 10-100nm) and Debye lengths can be of the order of 1-10nm. Bubbles within these regions can interfere. In the case of electrochemical removal, the bubbles are at least partially on the surface (i.e., in contact with).

"Liquid" as used herein has its usual meaning and encompasses solutions, such as those having a liquid component into which solutes are provided or other components are suspended. A solution may be a liquid together with a bubble and/or dissolved gas or may contain a further solute.

### Specific Aspects

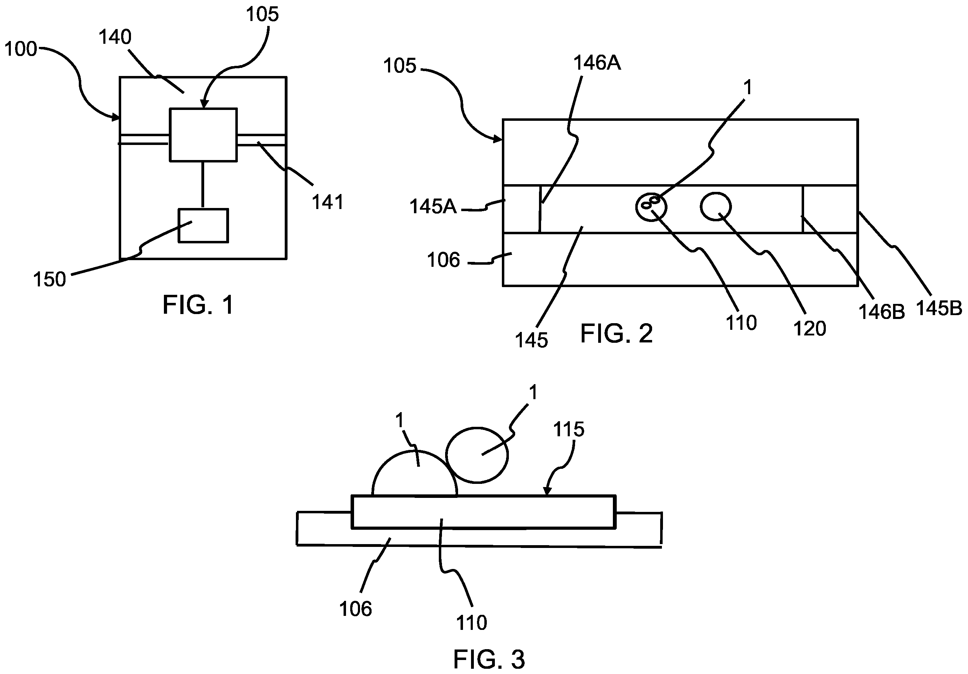

Fig. 1 schematically depicts a system 100 for determining the concentration of a target analyte according to an aspect, which comprises a sensing assembly 105. Figs. 2 and 3 schematically depict the sensing assembly 105 used in the system 100 of Fig. 1. Fig. 2 shows a schematic plan view of the sensing assembly 105 and Fig. 3 shows a schematic cross-sectional view of a part the sensing assembly 105.

As depicted in Fig. 1, the system 100 comprises the sensing assembly 105 and a processing unit 150 which acts as a control unit for the device and a signal processing unit for processing measurement signals received from the sensing assembly 105. The system 100 also comprises a fluid channel 145 extending from an inlet fluid path 140 into the sensing assembly 105 and continuing out of the sensing assembly 105 to an outlet fluid path 141. A sample can be provided to the sensing assembly 105 via the inlet fluid path 140.

The sensing assembly 105, which is most clearly seen in Fig. 2, comprises a substrate 106 on which is provided the components of the sensing assembly 105. A fluid channel 145 extends from a fluid inlet 145A, which is in fluid communication with the inlet fluid path 140, to a fluid outlet 145B, which is in fluid communication with the outlet fluid path 141. An inlet valve 146A is located in the fluid channel 145 adjacent the fluid inlet 146 and controls fluid flow therethrough. An outlet valve 146B is located in the fluid channel 145 adjacent the fluid outlet 145B and controls fluid flow therethrough.

The sensing assembly 105 also comprises a first electrode 110, which acts as a working electrode, and a second electrode 120, which acts as a counter electrode. These are both located within the fluid channel 145 between the inlet valve 146A and outlet valve 146B. In use, a liquid sample can be received between the inlet valve 146A and outlet valve 146B can therefore be interrogated by the first electrode 110 and second electrode 120 to obtain a measurement signal, which can be used to determine a property of the sample. A reference electrode is also used, but not depicted.

In system 100, bubbles can form within the fluid channel 145. Of particular interest in this aspect is a surface 115 defined by the upper surface of the first electrode 110 (i.e., the surface in contact with fluid (liquid/solution) received within the fluid channel 145). Such surfaces can be prone to bubble formation (for example, because it is difficult to treat the surfaces to reduce bubble formation as compared to the inner surfaces of a fluid channel such as fluid channel 145) and bubble formation on such surfaces can be particularly problematic (as compared to elsewhere) as bubbles can directly interfere with the measurement process. As can be seen in Figs. 2 and 3, the surface 115 (i.e., the upper surface of first electrode 110) has a bubble 1 formed directly on it and another bubble located adjacent the surface (in this case, directly above). The bubble 1 formed directly on surface 115 reduces the surface area of the first electrode 110 available for measurement, disrupting any quantitative accuracy and reducing performance. The bubble 1 not in direct contact but located above the first surface 115 may still have an impact on measurement, for example by reducing the amount of sample availability. The presence of the fluid channel 145, and the inlet valve 146A and outlet valve 146B will also increase the likelihood of bubble formation.

In the system 100 of this aspect, the system 100 is configured to reduce interference of measurement by one or more bubbles located on the surface 115 in the sensing assembly 105. In particular, the control unit 150 is configured to determine a first property of the sample in the fluid channel 145 and, based on the determination of the first property, cause the removal of at least a portion of the bubbles 1 from surface 115. In one aspect of this, the first property relates to the presence of one or more bubbles on or adjacent the surface of the sensing assembly.

In particular, the control unit 150 in this aspect is configured to carry out an EIS measurement using the first electrode 110 and second electrode 120. A reference electrode is present but not depicted. The EIS measurement can provide absolute values which are indicative of a bubble being present (e.g., where the response varies across a range in an unexpected manner, e.g., by a particularly large degree of variance) or by comparison with an expected response (e.g., taken in a calibration solution or typical of a sample). This is carried out in a usual manner, with the control unit 150 applying a sinusoidal voltage difference across first electrode 110 and second electrode 120 and measuring the response (measurement signal), which is processed by control unit 150. This can then be plotted, as necessary.

On detecting the presence of the bubbles 1 in the region on or adjacent (above, in this case) the surface 115, the control unit 150 is configured to then remove the bubbles 1. Removal of the bubbles 1 in this aspect is carried out using electrochemical reduction of the bubbles 1. In this case, the bubbles 1 are composed of oxygen and nitrogen. In response to the detection (i.e., based on the determination), the control unit 150 is configured to apply a potential at the reduction potential of oxygen for a period of time. This could, in some aspects, be further based on an indication of the reduction potential but in other aspects may be carried out based on an expected or predicted reduction potential. The period of time can be a set period, or EIS may be repeated to determine whether bubbles 1 are still present, and then the removal step resumed until the bubbles 1 are sufficiently small so as not to impact measurement, or removed.

Although in the above system 100, the counter or control electrode 120 is provided in the fluid channel 145, in other aspects, a separate counter electrode may be located elsewhere in the sensing assembly 105 (for example downstream of the outlet valve 146B or in a recess or branched off portion from the fluid channel 145). In these aspects, should bubbles form on the counter electrode during removal of the bubbles 1 from surface 115 (for example due hydrolysis of water or other redox reactions), this will nevertheless still result in a reduction of interference since the bubbles 1 will no longer be present on surface 115. In such aspects, the counter electrode 120 may be present still, and the aforementioned counter electrode be used for the removal step only (and therefore be present as an additional counter electrode) or the aforementioned counter electrode may replace counter electrode 120 (and hence be an alternative counter electrode), and may be used for the primary measurements of the sensing assembly 105.

Other variations are also possible. For example, although the system 100 includes the various fluid pathways depicted in Figs. 1 to 3, other systems may comprise the sensing assembly 105 as part of an "open" system which does not include fluidic channels. This may be, for example, used in aspects where a sample is provided to an upper surface of the sensing assembly 105 or where the sensing assembly 105 is dipped into a test solution.

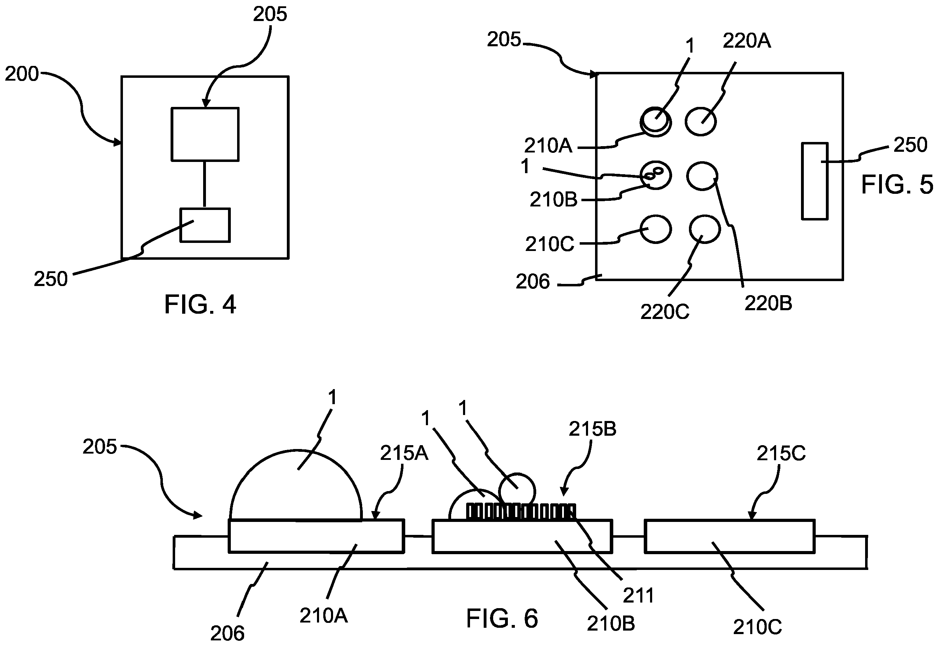

Fig. 4 schematically depicts another system 200 for determining properties of a sample according to an aspect, which comprises a sensor assembly 205. Figs. 5 and 6 schematically depict the sensor assembly 205 used in the system 200 of Fig. 4. Fig. 5 shows a schematic plan view of the sensor assembly 205 and Fig. 6 shows a schematic cross-sectional view of a part the sensor assembly 205.

As depicted in Fig. 4, the system 200 comprises the sensor assembly 205 and a processing unit 250 which acts as a control unit for the device and a signal processing unit for processing measurement signals received from the sensor assembly 205.

The sensor assembly 205, which is most clearly seen in Fig. 5, comprises a substrate 206 on which is provided the components of the sensor assembly 205. The sensor assembly 205 comprises an array of electrodes formed of three pairs of individually addressable electrode pairs. The first pair comprises a first working electrode 210A and a first counter electrode 220A. The second pair comprises a second working electrode 210B and a second counter electrode 220B. The third pair comprises a third working electrode 210C and a third counter electrode 220C. The sensor assembly 205 also comprises a common reference electrode 230, which can be used with any or all of the first to third electrode pairs. The use of three separate pairs of electrodes allows for the determination of plural properties of the sample, for example. In this particular aspect, the second working electrode 210B is functionalised with a plurality of capture species 211 (not to scale) on its upper surface, which capture species 211 specifically bind to a target analyte in the sample so that a property of the target analyte can be detected. In use, a sample is deposited onto the surface of the sensing assembly 105 so as to cover the entire upper surface of the substrate 206 and all of the first to third electrode pairs and reference electrode 230.

In this aspect, there are plural surfaces which the system is configured to keep free of bubbles, namely the upper surface 215A of the first working electrode 210A, the upper surface 215B (including the (optional) capture species 211) of the second working electrode 210B and the upper surface 215C of the third working electrode 210C, as depicted in Fig. 6.

In one example, bubbles 1 have formed on the surface 215A of the first working electrode 210A and the surface 215B of the second working electrode 210B. On the first working electrode 210A, one large bubble 1 has formed. On the second working electrode 210B a smaller bubble 1 has formed and a second bubble 1 has formed in the region above surface 215B.

In the system 200 of this aspect, the system 200 is configured to reduce interference of measurement by one or more bubbles located on the surfaces 215A-C in the sensor assembly 205. In particular, the control unit 250 is configured to determine a first property of the sample and, based on the determination of the first property, cause the removal of at least a portion of the bubbles 1 from surfaces 215A-C. In one aspect of this, the first property relates to a gas in the solution in the region on or adjacent the surfaces 215A-C of the sensor assembly 205.

In particular, the control unit 250 in this aspect is configured to carry out a CV measurement across a voltage range of from -0.9V to 1.2V using the first and/or second pair of electrodes and relative to an SHE reference electrode (not shown). The measurement signal(s) from this can be used to determine the reduction potential of gas in the solution. For example, the bubbles 1 in this example consist of oxygen, and therefore CV is used to determine the oxygen reduction potential in this solution. The control unit 250 calculates this based on the response from the CV measurement(s) and uses this in a subsequent removal step.

The removal step may be carried out at predetermined intervals (for example, at set time periods and/or before a measurement) or, in some aspects, an additional determination of an additional property is made relating to the presence of bubbles 1 and which may result in the control unit 250 performing the removal step. In the removal step, the control unit 250 causes the electrochemical reduction of the bubbles 1. In this aspect, the control unit 250 applies a potential across each of the first to third electrode at the determined reduction potential pairs for a period of time. This causes electrochemical reduction of oxygen in the bubbles 1 and reduces the size of the bubbles until they are removed. The bubble 1 on the surface 215A of the first working electrode 210A has a larger volume, and so in some aspects, the removal step will be carried out for longer for the first pair of electrodes. In other aspects, the process may be run for each pair of electrodes for the same period of time.

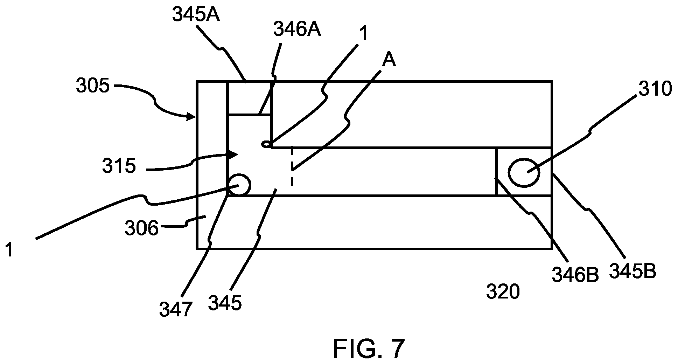

A further sensor assembly 305 is shown in the plan schematic view of Fig. 7. This sensor assembly 305 can be used in the systems according to aspect, such as the systems 100, 200 of the Figs. 1 and 4, instead of or in addition to the sensor assemblies 105, 205 set out in respect of those aspects.

In the sensor assembly 305, there is a substrate 306 on which is provided the components of the sensor assembly 305. A fluid channel 345 extends from a fluid inlet 345A to a fluid outlet 345B. An inlet valve 346A is located in the fluid channel 345 adjacent the fluid inlet 346 and controls fluid flow therethrough. An outlet valve 346B is located in the fluid channel 345 adjacent the fluid outlet 345B and controls fluid flow therethrough. In this aspect, the fluid channel 345 extends in a first direction in the upstream part on the sensor assembly 305, before turning 90 degrees at an elbow 347 and extending in a direction perpendicular to the upstream part. The sensor assembly 305 also comprises a first electrode 310 in the fluid channel 345, which acts as a working electrode.

In this sensor assembly 305, bubbles 1 can form within the fluid channel 345. Of particular interest in this aspect is a surface 315 defined by the elbow 347 and specifically the surface of the fluid channel 345 between (downstream) of the inlet valve 346A and (upstream of) line A. Such surfaces can be prone to bubble formation because of the turn in the channel, with corners acting as nucleation sites for bubbles 1 to form. This can be problematic as these can be dislodged during measurement and cause problems on the sensing surface downstream, or cause pockets of fluid to be retained and contaminate later samples, for example.

In this aspect, an optical detection device is located at the elbow 347 and monitors the surface for bubbles. A processor in the control unit will determine whether there are bubbles formed, and as a result, cause an agitation device (not shown) to remove the bubbles. In particular, in an example not in accordance with the invention, an ultrasonic device is located adjacent the fluid channel 345 and is configured to disturb bubbles in the elbow portion. This can cause the bubbles to redissolve and/or be dislodged into the bulk of the fluid, where they can pass downstream and through the fluid channel before a measurement. In some cases, this is combined with the use of flow through the channel.

It will be appreciated that this can be any part of a fluid channel, and particularly those prone to nucleation or trapping of bubbles, including valves, corners, restrictions. It will also be appreciated that other methods could be employed. For example, a set of measurement and/or removal electrodes could be placed either side of the surface 315 in the fluid channel 345 (or on the surface) to perform measurements of the first property and/or to carry out the removal step in accordance with the invention.

### Examples

Specific examples will now be set out. In each of the following Examples, the working electrodes are gold electrodes with a diameter of 175 micrometers and the measurements are carried out in 0.5M Sulfuric Acid. Counter and reference electrodes (not shown) are used in each of the measurements. In these examples, the reference was a gold reference electrode.

### Example 1 - Detecting the presence of bubbles (first property) using EIS

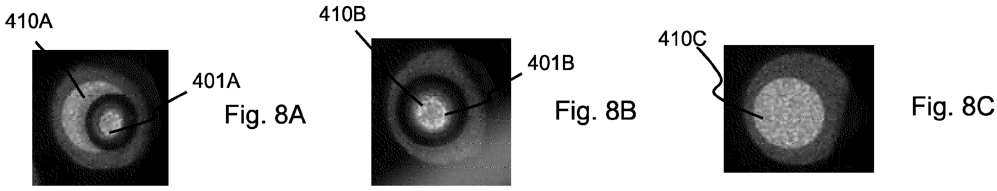

In Example 1, three working electrodes were covered with a 0.5 M H2SO4 solution. Figs. 8A to 8C each show one of the three working electrodes. In Fig. 8A, the first working electrode 410A is shown partially covered by a bubble 401A. In Fig. 8B, the second working electrode 410B is shown fully covered by a bubble 401B. In Fig. 8C, the third working electrode is shown without any bubbles.

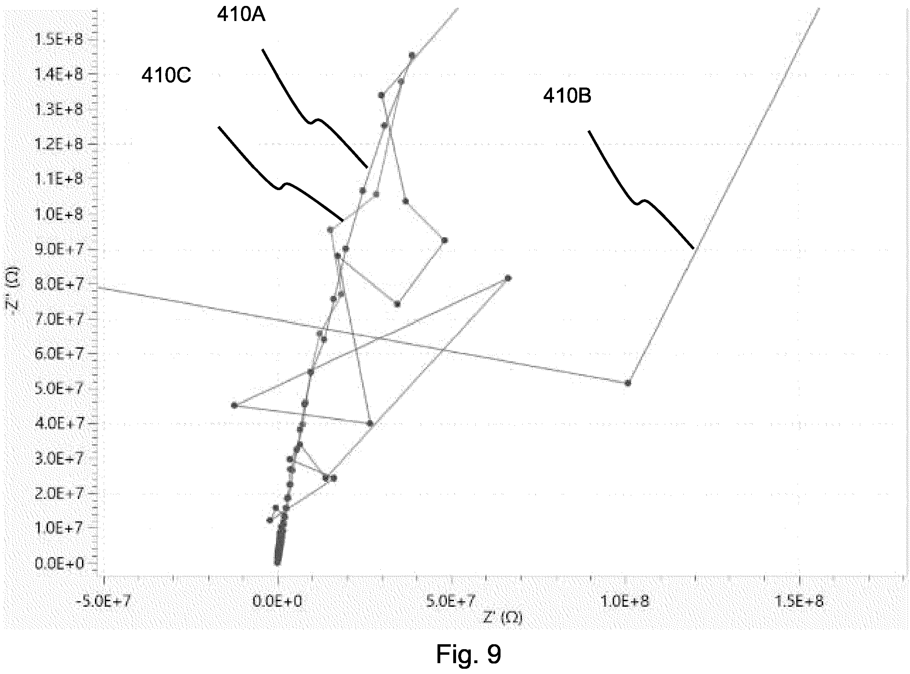

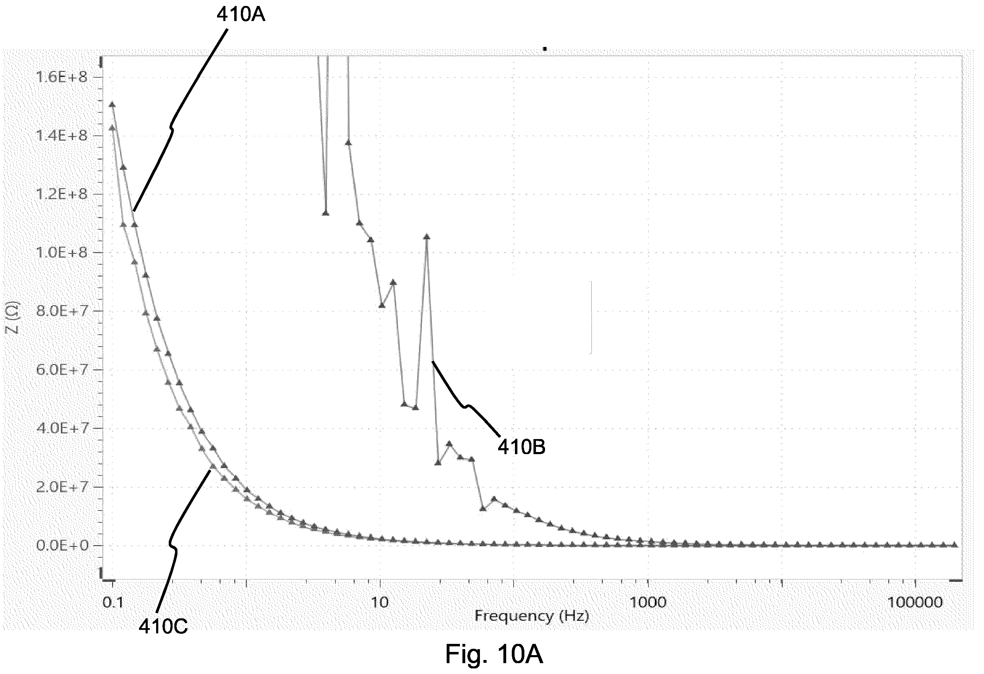

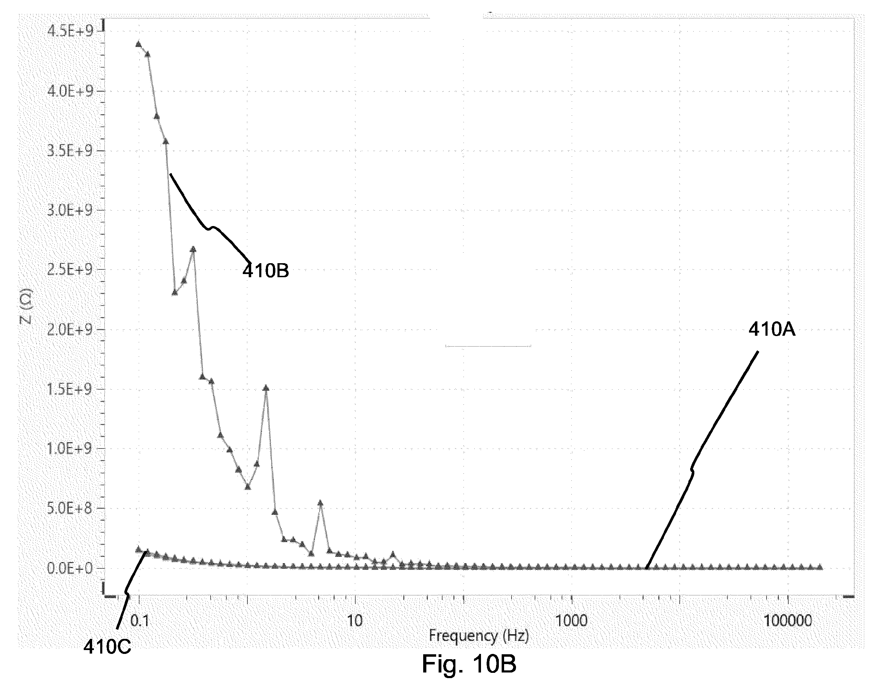

In this example, EIS was carried out for each of the three working electrodes 410A-C. The data was then plotted and shown in graphs depicted in Figs. 9,10A and 10B. Fig. 9 shows a Nyquist plot for the three working electrodes. As can be seen, the responses for the first working electrode 410A and the second working electrode 410B are very clearly distinct from that of the control third working electrode 410C. For example, in Fig. 9, a vastly noisy and varied response is shown (in red) for the second working electrode 410B. The variation between the control third working electrode 410C and the first working electrode 410A is also readily apparent. Figs. 10A and 10B show Bode Plots for the same experiment. This too demonstrates clear differences in EIS spectra between the first working electrode 410A and the second working electrode 410B, and that of the control third working electrode 410C.

### Example 2 - Detecting the reduction potential (first property) using CV and removing a bubble using CA

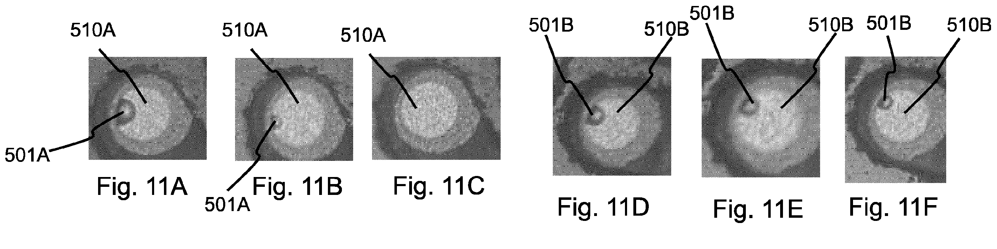

In Example 2, a first working electrode 510A was covered with 0.5M H₂SO₄ and an air-filled bubble 501A was formed on the surface of the first working electrode 510A, as shown in Fig. 11A. Similarly, a second working electrode 510B was covered with 0.5M H₂SO₄ and an air-filled bubble 501B was formed on the surface of the second working electrode 510B, as shown in Fig. 11D. Both the first and second working electrodes 510A, 510B are in the same system, but no current/voltage is applied to the second working electrode 510B during these experiments and as such, it is used as a control.

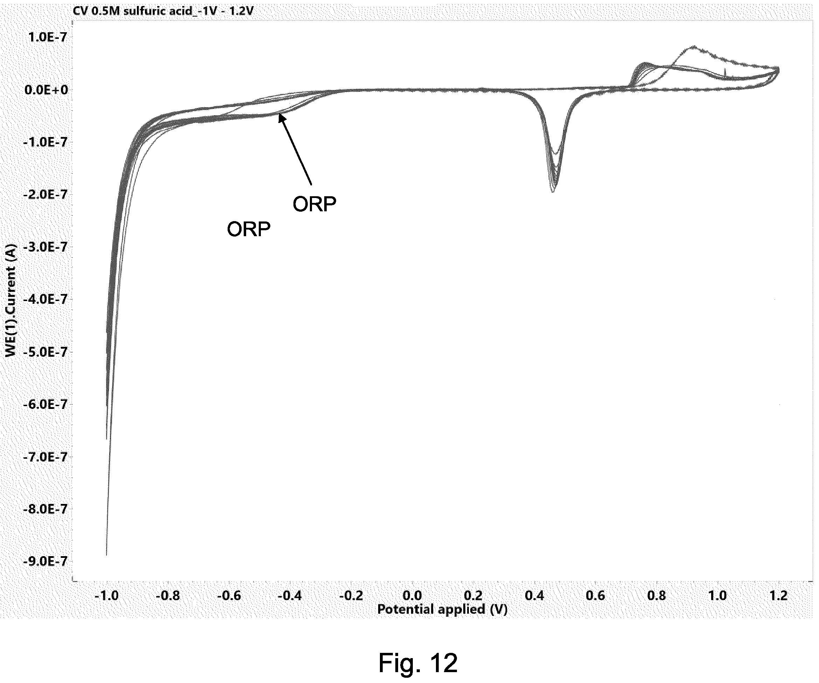

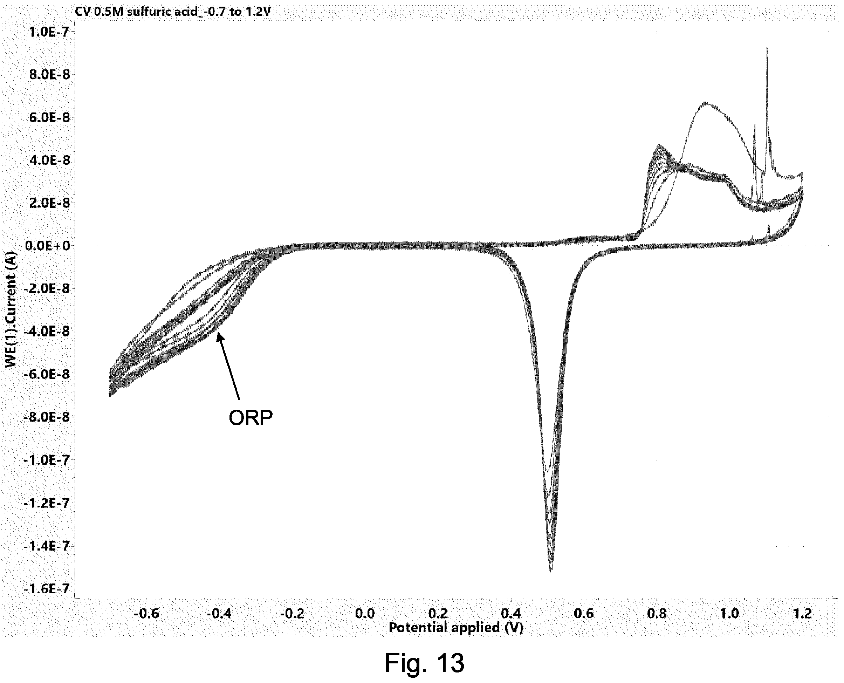

To determine the first property of the solution/bubble on the first working electrode 510A, which in this case is the reduction potential, CV was run as scan from a potential of - 1.0V to 1.2V with reference to the gold reference electrode. The results are plotted in Fig. 12 where plural scans are overlaid. The expected region for this component is in the range of - 0.8 to -0.3. Reviewing this, it can be seen that there is a step change in the current within this range at point reduction potential (i.e., the rate of change in the reduction current/signal is largest here (alternatively, it can simply be the first significant change e.g., a variation of > 20% in rate)), giving a reduction potential of -0.45V. This experiment was re-run, with a narrower window to avoid electrolysis of water at -1.0V, which is plotted in Fig. 13. In this experiment, the range was -0.7V to 1.2V, and it can be more clearly seen that the reduction potential is -0.45V.

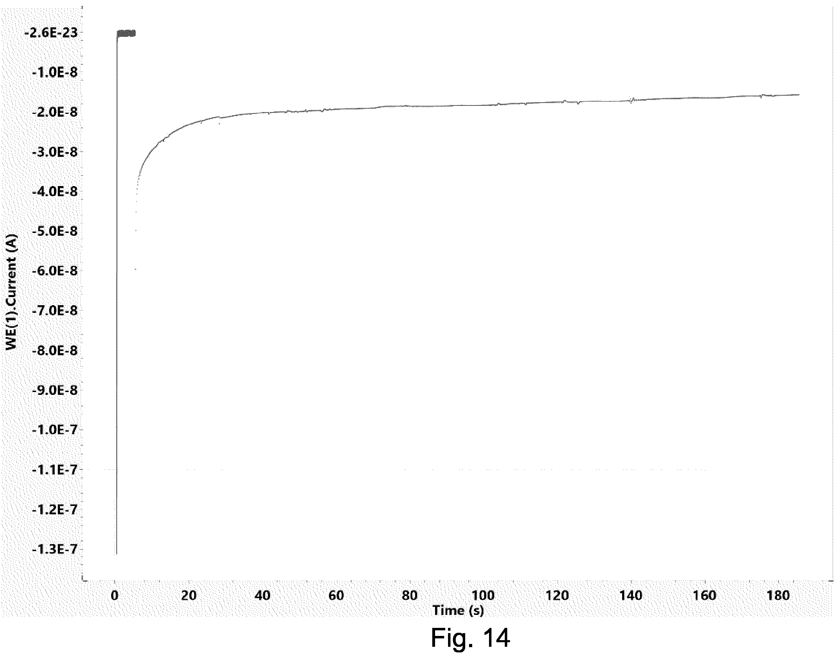

Having determined this working potential (i.e., the first property), CA was carried out by applying the determined reduction potential (i.e., at -0.45V) to the first working electrode 510A for 280 seconds. The applied potential is shown in Fig. 14, with the output current being approximately 20nA. This was not applied to the control (second working electrode 510B). The results are shown in the plan view of the first working electrode 510A in Figs. 11A to 11C and in the plan view of the second working electrode 510B in Figs. 11D to 11F. In particular, Figs. 11A and 11D show the electrodes and bubbles at 0s, Figs. 11B and 11E show the electrodes and bubbles at 180s and Figs. 11C and 11F show the electrodes and bubbles at 280s. As can be see, at 180s the volume of bubble 501A on the first working electrode 510A has significantly reduced (Fig. 11B) and by 280s it is gone completely. In contrast, the bubble 501B on the second working electrode 510B (control) remains.

### Example 3 - Removing a bubble using CA

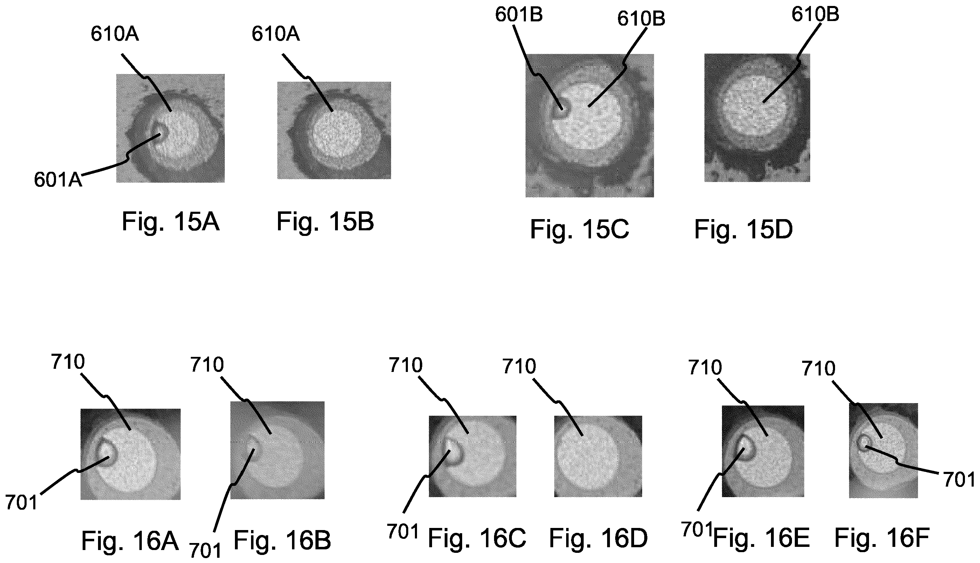

The removal part of the experiment of example 3 was repeated for additional electrodes the same solution and system. In a first repeat, the removal step was carried out removing a bubble 601A on second working electrode 610A based on the determined reduction potential of -0.45V. In this experiment, the measured current was approximately 30 nA. In a second repeat, the removal step was carried out on a bubble 601B on a third working electrode 610B based on the determined reduction potential of -0.45V and the resultant current was approximately 40 nA. In both cases, the bubbles were fully eliminated after 300s, as shown for the second working electrode 610A in Fig. 15A to Fig. 15B (after 300s) and for the third working electrode 610B in Fig. 15C to Fig. 15D (after 300s). For very large bubble/complete coverage of an electrode, the current is very small (~ 2nA), showing correlation of electrode size (non-covered by bubble) with current, and indicative of redox reaction occurring.

### Example 4 - Detecting the reduction potential (first property) using CV, running CA and varying the applied potential

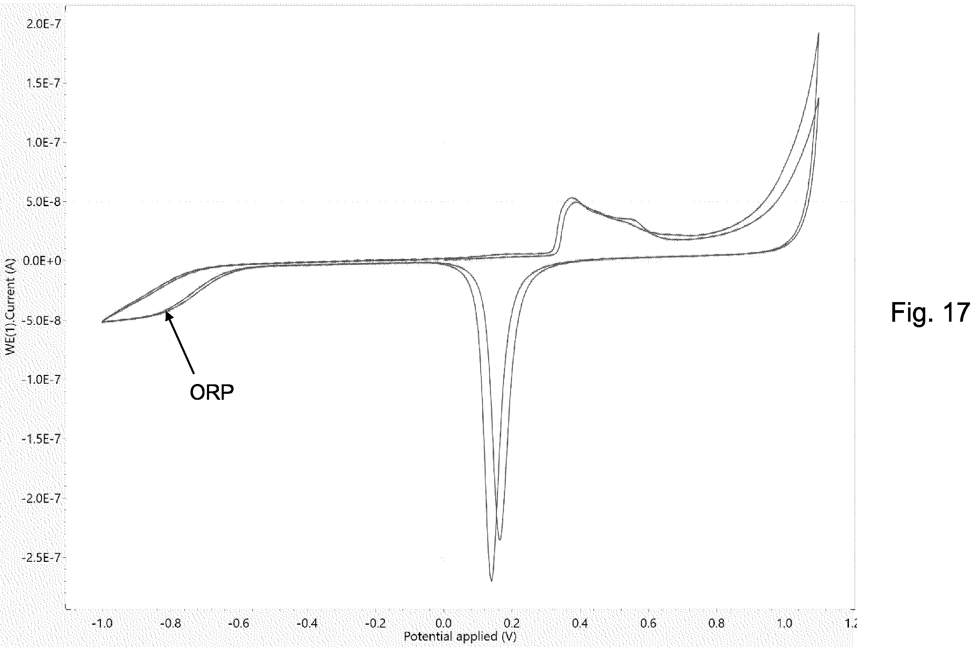

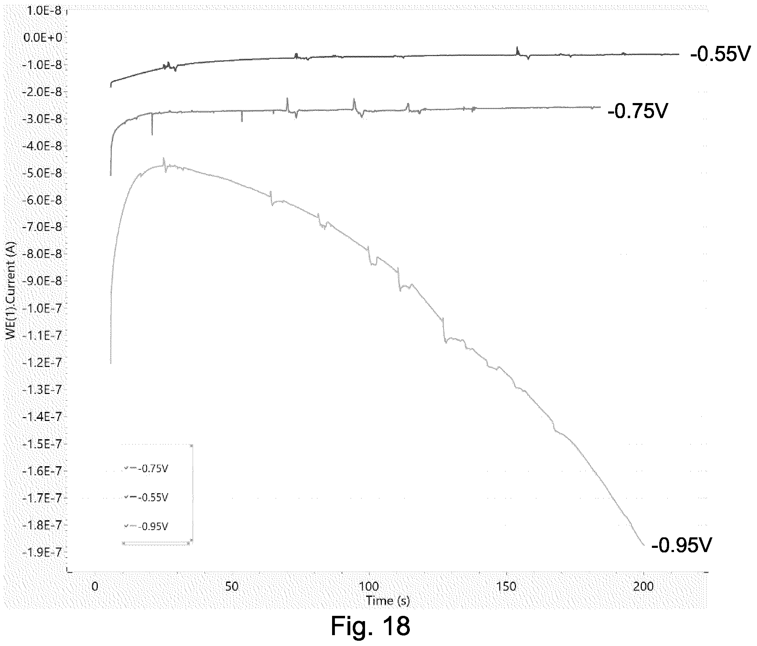

A similar experiment as for Examples 2 and 3 was run in which a working electrode 710 was covered with a 0.5M H₂SO₄ solution and an air-containing bubble 701 formed on the surface. A CV scan was run to identify the reduction potential and the results shown in Fig. 17. This identified a reduction potential of -0.75V, but for the sake of determining the benefit of basing the removal step on the reduction potential, Example 4 was run as three separate experiments at three different reduction potentials. A first was run at -0.55V, a second at the determined potential of -0.75V and a third at -0.95V. The results are shown in Figs. 16A to Fig. 16F and the current response is shown for each in Fig. 18. Figs. 16C and 16D relate to the second experiment at -0.55V before (0s) and after running CA for 200s, respectively. As can be seen in Fig. 16B, the bubble 701 has reduced in volume, but it remains. Figs. 16A and 16B relate to the first experiment at the determined reduction potential of -0.75V before (0s) and after running CA for 200s, respectively. As can be seen in Fig. 16D, the bubble 701 has been removed entirely. Figs. 16E and 16F relate to the third experiment at -0.95V before (0s) and after running CA for 200s, respectively. As can be seen in Fig. 16D, the bubble 701 has reduced in volume, but it remains. In this case, the bubble was observed as shrinking (not shown), but then it started to increase in size with the rapid increase of current (absolute value), as can be seen in Fig. 18. It is thought that this may be due to water electrolysis and gas formation.

### Method

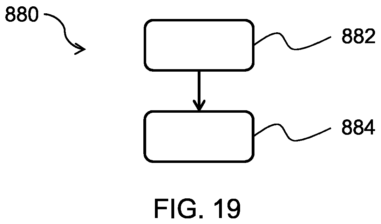

A method 880 for reducing interference by one or more bubbles in a sensing assembly, where the one or more bubbles are located in a solution in a region on or adjacent a surface of a sensing assembly, is depicted in Fig. 19. The method 880 comprises: determining a first property of the solution 882, wherein the first property relates to the presence of one or more bubbles on or adjacent the surface of the sensing assembly and/or relates to a gas in the solution in the region on or adjacent the surface of the sensing assembly; and based on the determination of the first property, removing at least a portion of the one or more bubbles from the region on or adjacent the surface of the sensing assembly 884.

It should be understood that the detailed description and specific examples, while indicating exemplary aspects of the apparatus, systems and methods, are intended for purposes of illustration only and are not intended to limit the scope. These and other features, aspects, and advantages of the apparatus, systems and methods of the present disclosure can be better understood from the description, appended claims or aspects, and accompanying drawings. It should be understood that the Figures are merely schematic and are not drawn to scale. It should also be understood that the same reference numerals are used throughout the figures to indicate the same or similar parts.

Other variations to the disclosed aspects can be understood and effected by those skilled in the art in practicing the disclosure, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A method (880) for reducing interference by one or more bubbles (1) in a sensing assembly (105, 205, 305), where the one or more bubbles (1) are located in a solution in a region on or adjacent a surface (115, 215A, 215B, 215C, 315) of a sensing assembly (105, 205, 305), the method (880) comprising:
determining a first property of the solution, wherein the first property relates to a presence of one or more bubbles (1) on or adjacent the surface (115, 215A, 215B, 215C, 315) of the sensing assembly (105, 205, 305) and/or relates to a gas in the solution in the region on or adjacent the surface (115, 215A, 215B, 215C, 315) of the sensing assembly (105, 205, 305); and
based on the determination of the first property, removing (884) at least a portion of the one or more bubbles (1) from the region on or adjacent the surface (115, 215A, 215B, 215C, 315) of the sensing assembly (105, 205, 305),
**characterised in that** removing (884) at least a portion of the one or more bubbles (1) comprises electrochemically reducing gas in the solution so as to reduce a volume of the one of more bubbles (1).

2. The method (880) of claim 1, wherein the method (880) comprises determining the first property, the first property relating to a gas in the solution in the region on or adjacent the surface (115, 215A, 215B, 215C, 315) of the sensing assembly (105, 205, 305), and wherein the first property is selected from at least one of a reduction potential of the gas in the solution and a concentration of dissolved gas in the solution.

3. The method (880) of claim 1 or claim 2, wherein the sensing assembly (105, 205, 305) comprises a sensing layer configured to provide a measurement signal indicative of an interaction of the sensing layer with the solution, and wherein the surface (115, 215A, 215B, 215C, 315) is a surface of the sensing layer.

4. The method of claim 3, wherein the sensing layer is an electrode (110, 210A-C, 310, 410A-B, 510A-B, 610A-B, 710).

5. The method (880) of any preceding claim, wherein removing (884) at least a portion of the one or more bubbles (1) comprises reducing a volume of the one or more bubbles (1).

6. The method (880) of claim 1, wherein the method (880) comprises determining the first property of gas in the solution on or adjacent the surface (115, 215A, 215B, 215C, 315) of the sensing assembly (105, 205, 305); and wherein electrochemically reducing gas in the solution is based on the determined first property of gas in the solution on or adjacent the surface (115, 215A, 215B, 215C, 315) of the sensing assembly (105, 205, 305).

7. The method (880) of claim 6, wherein determining the first property of gas in the solution comprises determining a reduction potential of gas in the solution, and wherein electrochemically reducing gas in the solution comprises applying a potential to the solution, wherein the applied potential is within 0.1 V of the determined reduction potential.

8. The method (880) of any one of claims 1, or 6 to 7, wherein electrochemically reducing gas in the solution comprises applying a potential using chronoamperometry (CA), chronopotentiometry (CP), applying a constant potential; and/or i-E cycling.

9. The method (880) of any preceding claim, wherein the method (880) comprises detecting the presence of one or more bubbles (1) on or adjacent the surface (115, 215A, 215B, 215C, 315) of the sensing assembly (105, 205, 305) using at least one of a spectroscopic measurement, an optical measurement, a gravimetric measurement or an electrical measurement.

10. The method of claim 9, wherein the method (880) comprises detecting the presence of one or more bubbles (1) in the region on or adjacent the surface (115, 215A, 215B, 215C, 315) of the sensing assembly using electrochemical impedance spectroscopy (EIS).

11. A system (100, 200) for reducing interference by one or more bubbles (1) in a sensing assembly (105, 205, 305), where the one or more bubbles (1) are located in a solution in a region on or adjacent a surface (115, 215A, 215B, 215C, 315) of a sensing assembly (105, 205, 305), the system (100, 200) comprising:
a sensing assembly (105, 205, 305), the sensing assembly (105, 205, 305) comprising at least one surface (115, 215A, 215B, 215C, 315); and
a control unit (150, 250) configured to:
determine a first property of the solution, wherein the first property relates to a presence of one or more bubbles (1) on or adjacent the surface (115, 215A, 215B, 215C, 315) of the sensing assembly (105, 205, 305) and/or relates to a gas in the solution in the region on or adjacent the surface (115, 215A, 215B, 215C, 315) of the sensing assembly (105, 205, 305); and
based on the determination of the first property, cause a removal of at least a portion of one or more bubbles (1) from the region on or adjacent the surface (115, 215A, 215B, 215C, 315) of the sensing assembly (105, 205, 305),
wherein the sensing assembly (105, 205, 305) comprises a sensing layer configured to provide a measurement signal indicative of an interaction of the sensing layer with the solution and wherein the sensing layer comprises an electrode (110, 210A-C, 310, 410A-B, 510A-B, 610A-B, 710) and the surface (115, 215A, 215B, 215C, 315) is a surface of the sensing layer,
**characterised in that** the control unit is configured to control the sensing assembly to electrochemically reduce gas in the solution using the electrode (110, 210A-C, 310, 410A-B, 510A-B, 610A-B, 710) and thereby reduce a volume of the one of more bubbles (1).

12. The system of claim 11, wherein the surface of the sensing assembly is a surface of the electrode.

13. The system (100, 200) of claim 11 or claim 12, wherein the control unit (150, 250) is configured to determine the first property by determining a reduction potential of gas in the solution; and
wherein the control unit (150, 250) is configured to cause the sensing assembly (105, 205, 305) to apply a potential to the solution within 0.1 V of the determined reduction potential so as to electrochemically reduce gas in the solution using the electrode (110, 210A-C, 310, 410A-B, 510A-B, 61 0A-B, 710) and thereby reduce the volume of the one of more bubbles (1).

14. The system (100, 200) of any one of claims 11 to 13, wherein the sensing assembly (105, 205, 305) further comprises a set of first property measurement electrodes; wherein the sensing assembly (105, 205, 305) is configured to obtain a first property measurement signal from the set of first property measurement electrodes; and wherein the control unit (150, 250) is configured to determine the first property of the solution based on the first property measurement signal.

## Patentansprüche

1. Verfahren (880) zur Verringerung von Interferenz durch eine oder mehrere Blasen (1) in einer Sensoranordnung (105, 205, 305), wobei sich die eine oder mehreren Blasen (1) in einer Lösung in einer Region auf oder benachbart zu einer Oberfläche (115, 215A, 215B, 215C, 315) einer Sensoranordnung (105, 205, 305) befinden, wobei das Verfahren (880) Folgendes umfasst:
Bestimmen einer ersten Eigenschaft der Lösung, wobei sich die erste Eigenschaft auf ein Vorhandensein von einer oder mehreren Blasen (1) auf oder benachbart zu der Oberfläche (115, 215A, 215B, 215C, 315) der Sensoranordnung (105, 205, 305) bezieht und/oder sich auf ein Gas in der Lösung in der Region auf oder benachbart zu der Oberfläche (115, 215A, 215B, 215C, 315) der Sensoranordnung (105, 205, 305) bezieht; und,
basierend auf der Bestimmung der ersten Eigenschaft, Entfernen (884) von zumindest einem Teil von der einen oder den mehreren Blasen (1) aus der Region auf oder benachbart zu der Oberfläche (115, 215A, 215B, 215C, 315) der Sensoranordnung (105, 205, 305),
**dadurch gekennzeichnet, dass** das Entfernen (884) von zumindest einem Teil von der einen oder den mehreren Blasen (1) elektrochemisches Verringern von Gas in der Lösung umfasst, um ein Volumen der einen oder mehreren Blasen (1) zu verringern.

2. Verfahren (880) nach Anspruch 1, wobei das Verfahren (880) Bestimmen der ersten Eigenschaft umfasst, wobei sich die erste Eigenschaft auf ein Gas in der Lösung in der Region auf oder benachbart zu der Oberfläche (115, 215A, 215B, 215C, 315) der Sensoranordnung (105, 205, 305) bezieht und wobei die erste Eigenschaft ausgewählt ist aus zumindest einem von einem Verringerungspotential des Gases in der Lösung und einer Konzentration von gelöstem Gas in der Lösung.

3. Verfahren (880) nach Anspruch 1 oder Anspruch 2, wobei die Sensoranordnung (105, 205, 305) eine Sensorschicht umfasst, die dazu konfiguriert ist, ein Messsignal bereitzustellen, das eine Wechselwirkung der Sensorschicht mit der Lösung angibt, und wobei die Oberfläche (115, 215A, 215B, 215C, 315) eine Oberfläche der Sensorschicht ist.

4. Verfahren nach Anspruch 3, wobei die Sensorschicht eine Elektrode (110, 210A-C, 310, 410A-B, 510A-B, 610A-B, 710) ist.

5. Verfahren (880) nach einem vorhergehenden Anspruch, wobei das Entfernen (884) von zumindest einem Teil von der einen oder den mehreren Blasen (1) Verringern eines Volumens der einen oder mehreren Blasen (1) umfasst.

6. Verfahren (880) nach Anspruch 1, wobei das Verfahren (880) Bestimmen der ersten Eigenschaft von Gas in der Lösung auf oder benachbart zu der Oberfläche (115, 215A, 215B, 215C, 315) der Sensoranordnung (105, 205, 305) umfasst; und wobei das elektrochemische Verringern von Gas in der Lösung auf der bestimmten ersten Eigenschaft von Gas in der Lösung auf oder benachbart zu der Oberfläche (115, 215A, 215B, 215C, 315) der Sensoranordnung (105, 205, 305) basiert.

7. Verfahren (880) nach Anspruch 6, wobei das Bestimmen der ersten Eigenschaft von Gas in der Lösung Bestimmen eines Verringerungspotentials von Gas in der Lösung umfasst, und wobei das elektrochemische Verringern von Gas in der Lösung Anlegen eines Potentials an die Lösung umfasst, wobei das angelegte Potential innerhalb von 0,1 V des bestimmten Verringerungspotentials ist.

8. Verfahren (880) nach einem der Ansprüche 1 oder 6 bis 7, wobei das elektrochemische Verringern von Gas in der Lösung Anlegen eines Potentials unter Verwendung von Chronoamperometrie (CA), Chronopotentiometrie (CP), Anlegen eines konstanten Potentials; und/oder i-E-Zyklisierung umfasst.

9. Verfahren (880) nach einem vorhergehenden Anspruch, wobei das Verfahren (880) Detektieren des Vorhandenseins von einer oder mehreren Blasen (1) auf oder benachbart zu der Oberfläche (115, 215A, 215B, 215C, 315) der Sensoranordnung (105, 205, 305) unter Verwendung von zumindest einem von einer spektroskopischen Messung, einer optischen Messung, einer gravimetrischen Messung oder einer elektrischen Messung umfasst.

10. Verfahren nach Anspruch 9, wobei das Verfahren (880) Detektieren des Vorhandenseins von einer oder mehreren Blasen (1) in der Region auf oder benachbart zu der Oberfläche (115, 215A, 215B, 215C, 315) der Sensoranordnung unter Verwendung von elektrochemischer Impedanzspektroskopie (EIS) umfasst.

11. System (100, 200) zur Verringerung von Interferenz durch eine oder mehrere Blasen (1) in einer Sensoranordnung (105, 205, 305), wobei sich die eine oder mehreren Blasen (1) in einer Lösung in einer Region auf oder benachbart zu einer Oberfläche (115, 215A, 215B, 215C, 315) einer Sensoranordnung (105, 205, 305) befinden, wobei das System (100, 200) Folgendes umfasst:
eine Sensoranordnung (105, 205, 305), wobei die Sensoranordnung (105, 205, 305) zumindest eine Oberfläche (115, 215A, 215B, 215C, 315) umfasst; und
eine Steuereinheit (150, 250), die zu Folgendem konfiguriert ist:
Bestimmen einer ersten Eigenschaft der Lösung, wobei sich die erste Eigenschaft auf ein Vorhandensein von einer oder mehreren Blasen (1) auf oder benachbart zu der Oberfläche (115, 215A, 215B, 215C, 315) der Sensoranordnung (105, 205, 305) bezieht und/oder sich auf ein Gas in der Lösung in der Region auf oder benachbart zu der Oberfläche (115, 215A, 215B, 215C, 315) der Sensoranordnung (105, 205, 305) bezieht; und,
basierend auf der Bestimmung der ersten Eigenschaft, Bewirken einer Entfernung von zumindest einem Teil von einer oder mehreren Blasen (1) aus der Region auf oder benachbart zu der Oberfläche (115, 215A, 215B, 215C, 315) der Sensoranordnung (105, 205, 305),
wobei die Sensoranordnung (105, 205, 305) eine Sensorschicht umfasst, die dazu konfiguriert ist, ein Messsignal bereitzustellen, das eine Wechselwirkung der Sensorschicht mit der Lösung angibt, und wobei die Sensorschicht eine Elektrode (110, 210A-C, 310, 410A-B, 510A-B, 610A-B, 710) umfasst und die Oberfläche (115, 215A, 215B, 215C, 315) eine Oberfläche der Sensorschicht ist,
**dadurch gekennzeichnet, dass** die Steuereinheit dazu konfiguriert ist, die Sensoranordnung zu steuern, um Gas in der Lösung unter Verwendung der Elektrode (110, 210A-C, 310, 410A-B, 510A-B, 610A-B, 710) elektrochemisch zu verringern und dadurch ein Volumen der einen oder mehreren Blasen (1) zu verringern.

12. System nach Anspruch 11, wobei die Oberfläche der Sensoranordnung eine Oberfläche der Elektrode ist.

13. System (100, 200) nach Anspruch 11 oder Anspruch 12, wobei die Steuereinheit (150, 250) dazu konfiguriert ist, die erste Eigenschaft durch Bestimmen eines Verringerungspotentials von Gas in der Lösung zu bestimmen; und
wobei die Steuereinheit (150, 250) dazu konfiguriert ist, zu bewirken, dass die Sensoranordnung (105, 205, 305) ein Potential an die Lösung innerhalb von 0,1 V des bestimmten Verringerungspotentials anlegt, um Gas in der Lösung unter Verwendung der Elektrode (110, 210A-C, 310, 410A-B, 510A-B, 610A-B, 710) elektrochemisch zu verringern und dadurch das Volumen der einen oder mehreren Blasen (1) zu verringern.

14. System (100, 200) nach einem der Ansprüche 11 bis 13, wobei die Sensoranordnung (105, 205, 305) ferner einen Satz erster Eigenschaftsmesselektroden umfasst; wobei die Sensoranordnung (105, 205, 305) dazu konfiguriert ist, ein erstes Eigenschaftsmesssignal von dem Satz erster Eigenschaftsmesselektroden zu erhalten; und wobei die Steuereinheit (150, 250) dazu konfiguriert ist, die erste Eigenschaft der Lösung basierend auf dem ersten Eigenschaftsmesssignal zu bestimmen.

## Revendications

1. Procédé (880) permettant de réduire les interférences par une ou plusieurs bulles (1) dans un ensemble de détection (105, 205, 305), où la ou les bulles (1) sont situées dans une solution dans une zone sur ou adjacente à une surface (115, 215A, 215B, 215C, 315) d'un ensemble de détection (105, 205, 305), le procédé (880) comprenant :
la détermination d'une première propriété de la solution, ladite première propriété se rapportant à une présence d'une ou plusieurs bulles (1) sur ou adjacentes à la surface (115, 215A, 215B, 215C, 315) de l'ensemble de détection (105, 205, 305) et/ou se rapportant à un gaz dans la solution dans la zone sur ou adjacente à la surface (115, 215A, 215B, 215C, 315) de l'ensemble de détection (105, 205, 305) ; et
sur la base de la détermination de la première propriété, le retrait (884) d'au moins une partie de la ou des bulles (1) de la zone sur ou adjacente à la surface (115, 215A, 215B, 215C, 315) de l'ensemble de détection (105, 205, 305),
**caractérisé en ce que** le retrait (884) d'au moins une partie de la ou des bulles (1) comprend la réduction électrochimique de gaz dans la solution de façon à réduire un volume de la ou des bulles (1).

2. Procédé (880) de la revendication 1, ledit procédé (880) comprenant la détermination de la première propriété, la première propriété se rapportant à un gaz dans la solution dans la zone sur ou adjacente à la surface (115, 215A, 215B, 215C, 315) de l'ensemble de détection (105, 205, 305), et ladite première propriété étant sélectionnée parmi au moins l'un d'un potentiel de réduction de gaz dans la solution et d'une concentration de gaz dissous dans la solution.

3. Procédé (880) de la revendication 1 ou de la revendication 2, ledit ensemble de détection (105, 205, 305) comprenant une couche de détection conçue pour fournir un signal de mesure indiquant une interaction de la couche de détection avec la solution, et ladite surface (115, 215A, 215B, 215C, 315) étant une surface de la couche de détection.

4. Procédé de la revendication 3, ladite couche de détection étant une électrode (110, 210A-C, 310, 410A-B, 510A-B, 610A-B, 710).

5. Procédé (880) d'une quelconque revendication précédente, ledit retrait (884) d'au moins une partie de la ou des bulles (1) comprenant la réduction d'un volume de la ou des bulles (1).

6. Procédé (880) de la revendication 1, ledit procédé (880) comprenant la détermination de la première propriété du gaz dans la solution sur ou adjacente à la surface (115, 215A, 215B, 215C, 315) de l'ensemble de détection (105, 205, 305) ; et ladite réduction électrochimique de gaz dans la solution étant basée sur la première propriété déterminée du gaz dans la solution sur ou adjacente à la surface (115, 215A, 215B, 215C, 315) de l'ensemble de détection (105, 205, 305).

7. Procédé (880) de la revendication 6, ladite détermination de la première propriété de gaz dans la solution comprenant la détermination d'un potentiel de réduction de gaz dans la solution, et ladite réduction électrochimique de gaz dans la solution comprenant l'application d'un potentiel à la solution, ledit potentiel appliqué étant compris dans les limites de 0,1 V autour du potentiel de réduction déterminé.

8. Procédé (880) de l'une quelconque des revendications 1, ou 6 à 7, ladite réduction électrochimique de gaz dans la solution comprenant l'application d'un potentiel à l'aide de la chronoampérométrie (CA), la chronopotentiométrie (CP), l'application d'un potentiel constant ; et/ou le cyclage i-E.

9. Procédé (880) d'une quelconque revendication précédente, ledit procédé (880) comprenant la détection de la présence d'une ou plusieurs bulles (1) sur ou adjacentes à la surface (115, 215A, 215B, 215C, 315) de l'ensemble de détection (105, 205, 305) à l'aide d'au moins l'une d'une mesure spectroscopique, d'une mesure optique, d'une mesure gravimétrique ou d'une mesure électrique.

10. Procédé de la revendication 9, ledit procédé (880) comprenant la détection de la présence d'une ou plusieurs bulles (1) dans la zone sur ou adjacente à la surface (115, 215A, 215B, 215C, 315) de l'ensemble de détection à l'aide de la spectroscopie d'impédance électrochimique (EIS).

11. Système (100, 200) permettant de réduire les interférences par une ou plusieurs bulles (1) dans un ensemble de détection (105, 205, 305), où la ou les bulles (1) sont situées dans une solution dans une zone sur ou adjacente à une surface (115, 215A, 215B, 215C, 315) d'un ensemble de détection (105, 205, 305), le système (100, 200) comprenant :
un ensemble de détection (105, 205, 305), l'ensemble de détection (105, 205, 305) comprenant au moins une surface (115, 215A, 215B, 215C, 315) ; et
une unité de commande (150, 250) conçue pour :
déterminer une première propriété de la solution, ladite première propriété se rapportant à une présence d'une ou plusieurs bulles (1) sur ou adjacentes à la surface (115, 215A, 215B, 215C, 315) de l'ensemble de détection (105, 205, 305) et/ou se rapportant à un gaz dans la solution dans la zone sur ou adjacente à la surface (115, 215A, 215B, 215C, 315) de l'ensemble de détection (105, 205, 305) ; et
sur la base de la détermination de la première propriété, entraîner un retrait d'au moins une partie d'une ou plusieurs bulles (1) de la zone sur ou adjacente à la surface (115, 215A, 215B, 215C, 315) de l'ensemble de détection (105, 205, 305),
ledit ensemble de détection (105, 205, 305) comprenant une couche de détection conçue pour fournir un signal de mesure indiquant une interaction de la couche de détection avec la solution et ladite couche de détection comprenant une électrode (110, 210A-C, 310, 410A-B, 510A-B, 610A-B, 710) et ladite surface (115, 215A, 215B, 215C, 315) étant une surface de la couche de détection,
**caractérisé en ce que** l'unité de commande est conçue pour commander l'ensemble de détection afin de réduire électrochimiquement un gaz dans la solution à l'aide de l'électrode (110, 210A-C, 310, 410A-B, 510A-B, 610A-B, 710) et ainsi réduire un volume de la ou des bulles (1).

12. Système de la revendication 11, ladite surface de l'ensemble de détection étant une surface de l'électrode.

13. Système (100, 200) de la revendication 11 ou de la revendication 12, ladite unité de commande (150, 250) étant conçue pour déterminer la première propriété en déterminant un potentiel de réduction de gaz dans la solution ; et ladite unité de commande (150, 250) étant conçue pour amener l'ensemble de détection (105, 205, 305) à appliquer un potentiel à la solution compris dans les limites de 0,1 V autour du potentiel de réduction déterminé de façon à réduire électrochimiquement un gaz dans la solution à l'aide de l'électrode (110, 210A-C, 310, 410A-B, 510A-B, 610A-B, 710) et ainsi réduire le volume de la ou des bulles (1).

14. Système (100, 200) de l'une quelconque des revendications 11 à 13, ledit ensemble de détection (105, 205, 305) comprenant en outre un ensemble de premières électrodes de mesure de propriété ; ledit ensemble de détection (105, 205, 305) étant conçu pour obtenir un premier signal de mesure de propriété à partir de l'ensemble de premières électrodes de mesure de propriété ; et ladite unité de commande (150, 250) est conçue pour déterminer la première propriété de la solution sur la base du premier signal de mesure de propriété.
